# EUROPEAN PATENT APPLICATION

(11) **EP 4 563 892 A1**
(43) Date of publication of application: **04.06.2025**
(21) Application number: 24212879.1
(22) Date of filing: 14.11.2024
(51) Int. Cl.: F24C 3/02, F24C 3/08, F24C 15/32

(54) **COOKING APPLIANCE**

(30) Priority: 01.12.2023 KR 20230172533
(71) Applicant: LG Electronics Inc., Yeongdeungpo-gu Seoul 07336 (KR)
(72) Inventor: PARK, Hyun Woo, 08592 Seoul (KR); WIE, Jeahyuk, 08592 Seoul (KR); JEONGHOON, Jeong, 08592 Seoul (KR); KIM, Jeong-Woo, 08592 Seoul (KR)
(74) Representative: Vossius & Partner Patentanwälte Rechtsanwälte mbB

(57) **Abstract**

A cooking appliance is proposed. The cooking appliance includes a frame (60) in which a cooking chamber (S1) is formed, and a circulation device (C) arranged in the frame (60). The circulation device (C) includes a circulation chamber ( SA)) therein, the circulation chamber (SA) communicating with the cooking chamber (S1). A heating device (100) is arranged outside the frame (60) to supply heated air to the circulation chamber (SA). The heating device (100) is arranged at a lower portion of the circulation device (C), and includes a burner case (110) having a combustion chamber (S5) therein, the combustion chamber (S5) being connected to the circulation chamber (SA). The heating device (100) includes a burner (120) heating air introduced into the combustion chamber (S5).

## Description

The present invention relates to a cooking appliance.

Cooking appliances are a type of home appliance to cook food and an appliance equipped in a kitchen space for cooking food. The cooking appliances may be classified in various ways according to the heat sources used, forms, and types of fuels. When the cooking appliances are classified according to a form in which food is cooked, the cooking appliances may be classified into an open type and a sealed type according to the form of the space in which the food is placed. The sealed-type cooking appliances include ovens and microwave ovens, and the open type cooking appliances include cooktops and griddles.

The sealed-type cooking appliances shield the space where food is placed with doors and heat the shielded space to cook the food. The sealed type cooking appliance includes a cooking chamber storing food therein and shielded when the food is cooked.

Among the sealed type cooking appliances, a cooking appliance using a gas burner as a heat source may include a burner to heat food inside the cooking chamber. For example, the burner is provided behind the cooking chamber to heat air. A convection fan is provided behind the burner to transfer air heated by the burner evenly to the cooking chamber.

When the convection fan is operated, air is sucked toward the convection fan, and a flame of the burner may face a rear wall surface of the cooking chamber. The wall of the cooking chamber is overheated and a coating layer such as an enamel layer, etc. may be damaged due to heat. To solve this problem, a separate protecting means such as a burner reflector to protect a wall surface of the cooking chamber from the heat of the burner is necessarily equipped in the cooking appliance.

Furthermore, a flow of the air sucked by the convection fan may make the flame of the burner unstable. This problem may be solved by providing a separate stabilizer between the burner and the convection fan and preventing a flow of air caused by the convection fan from directly affecting the burner.

However, the existing cooking appliance needs a separate component such as a burner reflector and a stabilizer, so the number of components and the manufacturing cost thereof increase, and it is difficult to design the cooking appliance due to the complexity of a structure of a heating device, which are problems.

As another method, the velocity of the convection fan may be reduced or the convection fan may be intermittently operated for the stability of a flame. However, as described above, when the velocity of the convection fan is reduced or the convection fan is intermittently operated, it is impossible to realize various cooking methods using the heating device, which is a disadvantage.

Furthermore, an installation space for the heating device including the burner is required behind the existing cooking appliance. Accordingly, there is a problem in which the installation space of the heating device limits the front-rear directional depth of the cooking chamber. In addition, due to a space occupied by additional components such as a burner reflector and a stabilizer, the volume of the cooking chamber is reduced, which is a problem.

In addition, a fan cover covering the convection fan should cover the heating device arranged at the rear side, so there is a limitation in reducing the size of the fan cover, and there is a problem in which it is difficult to perform a shape change of the fan cover.

Furthermore, the burner provided in the cooking appliance heats not only air in the heating chamber but also surrounding components such as a burner cover constituting the heating chamber. Specifically, a frame constituting the cooking chamber may be changed by high temperature heat or an enamel coating layer of the frame may be damaged. As described above, when the burner heats surrounding components other than air, the durability of the surrounding component and the heat efficiency of the heating device are reduced, which is a problem.

The present invention is specified by the independent claim. Preferred embodiments are defined by the dependent claims.The present invention is provided to solve the problems of the related art as described above, and an objective of the present invention is to arrange a heating device for heating air into an independent space separately from a circulation device for circulating air of a cooking chamber.

Another objective of the present invention is to supply air heated by a heating device into a cooking chamber even when a circulation fan is not operated.

Yet another objective of the present invention is to arrange a heating device at a lower portion of a cooking chamber to prevent radiant heat of a burner from being transferred to a wall surface of the cooking chamber.

Still another objective of the present invention is to enable a flame generated from a heating device to be concentrated to air supplied from the heating device to a circulation device.

According to the features of the present invention to achieve the above-described objectives, in an aspect of the present invention, there is provided a cooking appliance that may include a frame having a cooking chamber therein, and a circulation device arranged inside the frame. The circulation device may have a circulation chamber herein, the circulation chamber communicating with the cooking chamber. A heating device may be arranged outside the frame to supply heated air to the circulation chamber. The heating device may include a burner case arranged at a lower portion of the circulation device, and having a combustion chamber therein, the combustion chamber being connected to the circulation chamber. The heating device may include a burner configured to heat air introduced into the combustion chamber. As described above, the burner may be provided in the burner case which is a space separate from the circulation device. Accordingly, even when a circulation fan of the circulation device is operated, a flame of the burner is not affected by the fan, so a stabilizer is not necessary, and a burner reflector for protecting the inner wall of the cooking chamber from the flame can be omitted.

In addition, the cooking chamber may include a connection passage connecting the circulation chamber and the combustion chamber to each other. The heating device may be arranged opposite to the circulation device with the connection passage located therebetween. A flow path in the circulation device and a flow path of the heating device may form a vertically continuous flow path.

Furthermore, the connection passage of the frame may be provided in the bottom surface of the frame. The circulation device may be arranged at an upper portion of the bottom surface of the frame. The heating device may be arranged at a lower portion of the bottom surface. In this state, air heated by the heating device may be raised along the continuous flow path by natural draft and then supplied to the cooking chamber.

In addition, the circulation chamber may provide a first flow path connected to the cooking chamber. The combustion chamber may provide a second flow path transferring air heated by the burner to the first flow path, and the first flow path and the second flow path may be connected to each other through a connection passage provided in the bottom surface of the frame in a height direction of the frame.

Furthermore, a flame hole of the burner may be open toward the second flow path. As described above, the flame hole of the burner faces a flow path, not a wall surface of the cooking chamber or the case, so there is no risk for the surrounding components to be overheated by the burner.

In addition, an outer case covering the frame may be provided. An installation space may be provided between the frame and the outer case. The combustion device may be arranged in the installation space. As described above, the heating device is arranged at the lower portion of the cooking chamber, and the volume of the cooking chamber is prevented from being reduced due to the space occupied by the heating device.

Furthermore, the burner has a linear pipe structure extending in one direction along a rear edge of a lower portion of the frame. This structure can reduce the front-rear directional space occupied by the burner.

In addition, the combustion chamber may include a heating flow path configured to guide heated air toward the circulation chamber. The burner may be arranged at a position deviating from the heating flow path. The burner may generate flames toward the heating flow path.

In addition, the cooking chamber may include a connection passage connecting the circulation chamber and the combustion chamber to each other. A flame guide may be arranged between the burner and the connection passage. The flame guide may guide a generation direction of flames of the burner.

In addition, the flame guide may be arranged in a direction inclined upward from the burner toward the connection passage. A heating flow path may be formed between a lower portion of the flame guide and the bottom surface of the burner case to guide heated air.

Furthermore, the burner may generate flames in a first direction, and the circulation device and the heating device may be stacked together in a second direction orthogonal to the first direction. A wide space can be secured in front of the first direction, so a sufficient amount of air can be heated and then supplied to the circulation device.

In addition, the circulation device and the heating device may be fixed to the surface of the frame at different positions. Furthermore, with a surface of the circulation device and a surface of the heating device in non-contact with each other, the circulation device and the heating device may be coupled to the frame respectively. Accordingly, conductive heat of the heating device transferred to the circulation device is significantly reduced, so the energy efficiency of the cooking appliance may increase, and the durability of the circulation device may be improved.

In addition, the circulation device may be fixed to a first surface among surfaces of the frame, the surface facing the cooking chamber, and the heating device may be fixed to a second surface opposite to the first surface of the frame.

Furthermore, a part of the burner case may be open toward the connection passage. In addition, a part of the burner case may protrude into the circulation chamber through the connection passage to form a protrusion. The protrusion may include a heating outlet part that is open toward the circulation chamber. The protrusion may prevent leakage of heated air.

Furthermore, the circulation device may include a cover plate arranged in front of a wall surface of the cooking chamber. The cover plate may have a suction hole to suck air of the cooking chamber, and the circulation chamber may be formed between the cover plate and the wall surface of the cooking chamber. The circulation device may include a partition plate between the cover plate and the wall surface of the cooking chamber. The partition plate may partition the circulation chamber into a heating chamber and a discharge chamber, and a communication hole may be formed open in the partition plate to connect the heating chamber and the discharge chamber to each other. The combustion chamber may be connected to the heating chamber. A circulation fan may be arranged in the discharge chamber to circulate air in the cooking chamber.

In addition, the discharge chamber may have a discharge hole formed open to discharge air introduced into the discharge chamber to the cooking chamber.

Furthermore, the rotation shaft of the circulation fan may be provided in a direction parallel to an open direction of the flame hole of the burner.

In addition, based on an extension direction of a flow path in which the combustion chamber and the heating chamber are connected to each other, the burner may be arranged in a position that deviates from a range in which the burner overlaps with the heating chamber.

Furthermore, based on the extension direction of the flow path connecting the combustion chamber and the heating chamber to each other, the entire part or a part of the burner may be arranged at a position where the burner overlaps with the discharge chamber.

In addition, the burner case may include a guide duct arranged at a position spaced in the open direction of the flame hole of the burner. A heating flow path may be provided inside the guide duct to connect the combustion chamber and the heating chamber to each other.

Furthermore, a rear panel covering the frame may be provided. The heating device may further protrude toward the surface of the rear panel than the circulation device.

In addition, the burner case may include a front plate constituting a front surface of the combustion chamber, a side plate constituting a side surface of the combustion chamber, an upper plate constituting an upper surface of the combustion chamber, and a lower plate constituting a bottom surface of the combustion chamber. The burner case may include a chamber opening allowing the combustion chamber to be open rearwards of the burner case.

Furthermore, the upper plate or the lower plate and the outer case may be spaced apart from each other to form a second inlet part between the upper plate or the lower plate and the outer case. The second inlet part may be connected to the chamber opening.

In addition, the chamber opening may be connected to a panel opening open in the outer case. The entire part or a part of the panel opening may be shielded by a shielding cover arranged in the outer case.

Furthermore, the upper plate may have an upper opening connected to the connection passage.

In addition, the side plate may include a bracket hole through which a bracket part of the burner passes.

Furthermore, the burner case may include a fixation rib formed of a part of the upper plate bent toward the lower plate. A first end portion of the burner may be coupled to the fixation rib.

As described above, the cooking appliance according to the present invention has following effects.

In the present invention, the burner may be arranged at a lower portion of the circulation device circulating air of the cooking chamber and may be provided inside the burner case that is a space independent from the circulation device. With this structure, even when the circulation fan of the circulation device is operated, a flame of the burner is not affected by the fan, so a stabilizer is not necessary, and a burner reflector for protecting the inner wall of the cooking chamber from the flame can be omitted. This allows the present invention to achieve the technical effects of reducing the number of components and the assembly work hours of the cooking appliance and lowering the manufacturing cost.

Furthermore, the burner is arranged into an independent space separated from the circulation fan, so there is no risk in which the combustion of the burner becomes unstable by operation of the circulation fan. Accordingly, the burner can generate more stable flames, and therefore, the cooking performance of the cooking appliance can be improved.

In addition, the circulation fan is free from the combustion instability of the burner, so an air flow of the circulation fan can be changed during the combustion of the burner,which enables the cooking appliance to provide various cooking methods for a user.

In addition, in the present invention, the heating device is arranged at the lower portion of the cooking chamber, so a reduction of the volume of the cooking chamber due to the occupied space of the heating device does not occur. Therefore, a relatively larger size of the cooking chamber can be secured, and based on the same size of the cooking chamber, the cooking appliance can be minimized.

Furthermore, in the present invention, the circulation device and the heating device may have different heights and be arranged in a height (vertical) direction. A flow path in the circulation device and a flow path of the heating device may form a vertically continuous flow path. Air heated by the heating device may be raised along the continuous flow path by natural draft and then may be supplied into the cooking chamber. Therefore, even when the circulation fan is not operated, heated air can be supplied to the cooking chamber, so the cooking appliance of the present invention can provide more various cooking modes.

In addition, in the present invention, the heating device may be arranged at the lower portion of the frame and the outside space of the cooking chamber. The cooking chamber is completely independent of the heating device, so the inside space of the cooking chamber can be freely designed.

At this point, in the present invention, the heating device is arranged at the lower portion of the circulation device, and the entire lower portion of the circulation device may overlap with the upper portion of the heating device. A front-rear directional length (depth direction of the cooking chamber) of the circulation device and the heating device can be minimized, and the cooking appliance can be minimized. In addition, when the entire lower portion of the circulation device overlaps with the upper portion of the heating device, an air flow path between the heating device and the circulation device is shortened, and heat loss can be reduced.

In addition, in the present invention, the heating device may be arranged at the lower portion of the discharge chamber of the circulation device. Accordingly, heat inside the heating device is radiated to the discharge chamber, and air in a more heated state of the discharge chamber can be supplied to the cooking chamber. Accordingly, the heat efficiency of the cooking appliance can increase.

Furthermore, since the heating device is not located inside the cooking chamber, a component such as the fan cover, etc. doesn't need to be formed excessively larger to shield the heating device, and to match with the form of the heating device. Accordingly, the degree of freedom in the internal design of the cooking chamber can increase.

Furthermore, when the heating device is arranged at the lower portion of the frame, air passing through a space between the frame and the case may naturally cool the heating device. Accordingly, the cooling efficiency of the heating device can increase.

In addition, as the heating device is arranged outside the cooking chamber, radiant heat of the burner is not directly transferred to a wall surface of the cooking chamber, and the durability of the cooking appliance can increase.

Specifically, in the present invention, the heating device and the circulation device can be respectively coupled to the frame without being in direct contact with each other. Accordingly, conductive heat of the heating device transferred to the circulation device is significantly reduced, so the energy efficiency of the cooking appliance can increase, and the durability of the circulation device can be improved.

Furthermore, in the present invention, the flame hole of the burner may be formed open toward the flow path extending from the heating device to the circulation device. Accordingly, a flame generated from the burner may be concentrated to air supplied from the heating device to the circulation device and heat air in the cooking chamber quickly to increase the cooking performance.

In addition, the flame hole of the burner faces a flow path, not a wall surface of the cooking chamber or the case, so there is no risk for the surrounding components to be overheated by the burner.

Furthermore, in the present invention, the heating device is arranged at a position deviating from the cooking chamber, so it is possible to prevent food scraps, etc. from entering the heating device during the cooking process of food. Accordingly, the durability of the heating device can be increased.

In addition, the present invention may include the first inlet part in which external air is directly introduced toward the burner of the heating device and the second inlet part in which additional external air is introduced through a gap between the heating device and the outer case. The external air introduced through the second inlet part may be used as the secondary air supplied to the burner to facilitate the complete combustion of gas. Accordingly, the heating performance of the cooking appliance can be improved.

At this point, in the present invention, the combustion chamber in the heating device may have a negative pressure when air heated by the burner is raised upward to the heating chamber. With the negative pressure of the combustion chamber, external air can be naturally sucked into the combustion chamber through the second inlet part and be used as the secondary air. As described above, in the present invention, external air can be sucked even without a separate fan for suction of the secondary air, so a reduction of the number of components, simplification of the structure, and reduction of unnecessary energy to supply air can be achieved.

Furthermore, in the present invention, the flow path guide may be arranged in the heating device to partition the internal space of the heating device into the heating flow path and the cooling flow path. The heating flow path and the cooling flow path may be respectively a passage for heated high-temperature air and a passage for relatively low-temperature air. Accordingly, the heating device and the surrounding part of the heating device can be cooled, and the durability of the cooking appliance can be improved.

### BRIEF DESCRIPTION OF THE DRAWINGS

FIG. 1 is a perspective view illustrating an embodiment of a cooking appliance according to the present invention.
FIG. 2 is a perspective view illustrating the inside space of a cooking chamber of an oven unit constituting the embodiment of the present invention.
FIG. 3 is a front view illustrating the inside space of the cooking chamber of the oven unit without a cook-top unit and a drawer unit constituting the embodiment of the present invention.
FIG. 4 is a rear view illustrating the rear side of the oven unit without the cook-top unit and the drawer unit constituting the present invention.
FIG. 5 is a rear view illustrating the view of FIG. 4 without a cover plate.
FIG. 6 is an exploded perspective view illustrating components of the oven unit constituting the embodiment of the present invention.
FIG. 7 is an exploded perspective view illustrating a fan cover, a partition cover, a fan device, and a heating device among components of the oven unit constituting the embodiment of the present invention.
FIG. 8 is a front view illustrating a sectional structure taken by cutting a part of the oven unit to expose the fan device and the heating device constituting the embodiment of the present invention.
FIG. 9 is a sectional view taken along a line IX-IX' of FIG. 2.
FIG. 10 is a sectional view illustrating a side structure of the oven unit and the drawer unit constituting the embodiment of the present invention.
FIG. 11 is an enlarged side view illustrating a circulation device and the heating device of FIG. 10.
FIG. 12 is an enlarged perspective view illustrating the circulation device and the heating device of FIG. 10.
FIG. 13 is a perspective view illustrating a structure of the heating device constituting the embodiment of the present invention.
FIG. 14 is a perspective view illustrating the structure of the heating device constituting the embodiment of the present invention at a different angle from FIG. 13.
FIG. 15 is a front view illustrating a structure of a burner among components of the heating device constituting the embodiment of the present invention.
FIG. 16 is a plan view illustrating the structure of the heating device constituting the embodiment of the present invention.
FIG. 17 is a rear view illustrating the structure of the heating device constituting the embodiment of the present invention.
FIG. 18 is a sectional view taken along a line XVIII-XVIII' of FIG. 3.
FIG. 19 is a perspective view illustrating the view of FIG. 18 at a different angle.
FIG. 20 is a perspective view illustrating the view of FIG. 18 at a different angle from FIG. 19.
FIG. 21 is a sectional view taken along a line XXI-XXI of FIG. 3.
FIG. 22 is a perspective view illustrating a rear lower structure of the oven unit constituting the embodiment of the present invention.
FIG. 23 is a sectional view taken along a line XXIII-XXIII' of FIG. 22.
FIG. 24 is a perspective view illustrating a rear lower structure of the oven unit constituting a second embodiment of the present invention.
FIG. 25 is a sectional view taken along a line XXV-XXV' of FIG. 24.
FIG. 26 is a sectional view illustrating a structure of the heating device constituting a third embodiment of the present invention.
FIG. 27 is a sectional view illustrating a structure of the heating device constituting a fourth embodiment of the present invention.
FIG. 28 is a perspective view illustrating a structure of the burner and a guide duct among components of the heating device constituting the fourth embodiment of the present invention.
FIG. 29 is a perspective view illustrating a structure of the guide duct among components of the heating device constituting the fourth embodiment of the present invention.
FIG. 30 is a side view illustrating the structure of the guide duct among components of the heating device constituting the fourth embodiment of the present invention.
FIG. 31 is a sectional view illustrating a structure of the heating device constituting a fifth embodiment of the present invention.
FIG. 32 is a perspective view illustrating a structure of the burner and the guide duct among components of the heating device constituting the fifth embodiment of the present invention.
FIG. 33 is a side view illustrating the structure of the guide duct among components of the heating device constituting the fifth embodiment of the present invention.
FIG. 34 is a plan view illustrating a structure of a flame guide among components of the heating device constituting a sixth embodiment of the present invention.
FIG. 35 is a sectional view illustrating a structure of the burner and the flame guide among components of the heating device constituting the sixth embodiment of the present invention.
FIG. 36 is a plan view illustrating a structure of the flame guide among components of the heating device constituting a seventh embodiment of the present invention.
FIG. 37 is a sectional view illustrating a structure of the burner and the flame guide among components of the heating device constituting the seventh embodiment of the present invention.

### DETAILED DESCRIPTION

Hereinafter, exemplary embodiments of the present invention will be described in detail with reference to the illustrative drawings. Wherever possible, the same reference numerals will be used throughout the drawings and the description to refer to the same or like elements or parts. Furthermore, it is to be noted that, when the detailed description of the functions and configuration of conventional elements related to the present invention may make the gist of the present invention unclear, a detailed description of those elements will be omitted.

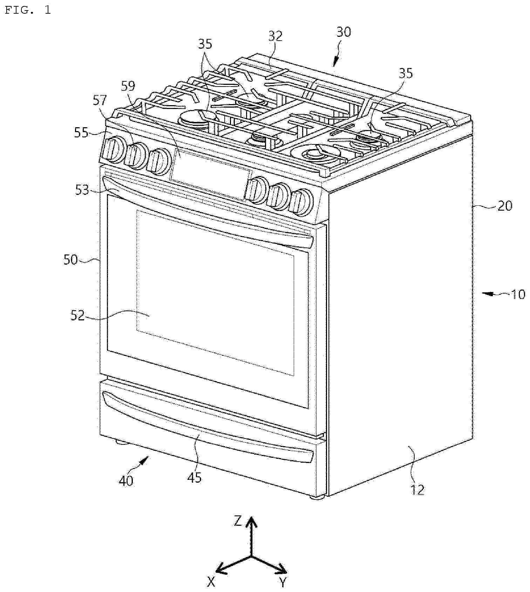

The present invention relates to a cooking appliance. Herein, the cooking appliance may include a cooking chamber S1 therein. The cooking appliance of the present invention may be a sealed cooking appliance in which the cooking chamber S1 is opened and closed by the door 50. Among terms described below, "a front side" may be a direction toward a user when the user is located in front of the cooking appliance. Referring to FIG. 1, an X-axial direction may be directed to the front side. A Y-axial direction may be a left-right width direction of the cooking chamber S1. A Z-axial direction may be a height direction of the cooking chamber S1. Hereinbelow, the cooking appliance will be described based on the directions.

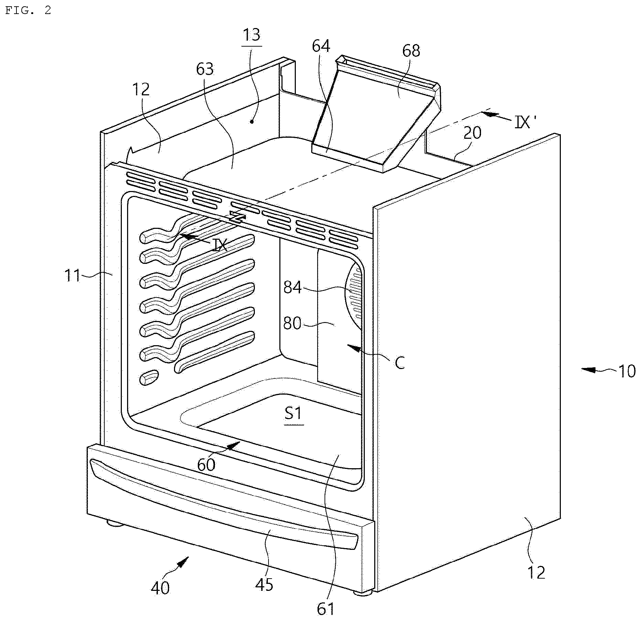

As shown in FIGS. 1 and 2, a frame of the cooking appliance may be formed by an outer case 10. The outer case 10 may be considered a portion exposed outside of the cooking appliance. The outer case 10 may have a rough hexahedral structure. An oven unit, which will be described below, may be disposed inside the outer case 10.

A cook-top unit 30 may be disposed at an upper portion of the cooking appliance, and a drawer unit 40 may be disposed at a lower portion thereof. The cook-top unit 30 may constitute an upper portion of the outer case 10. The drawer unit 40 may constitute a lower portion of the outer case 10. The oven unit may be disposed between the cook-top unit 30 and the drawer unit 40. As another example, the cook-top unit 30 or the drawer unit 40 may be omitted or both may be omitted.

In explaining a structure of the outer case 10 in detail, the outer case 10 may be provided to be shaped with a rough cuboid shape. The outer case 10 is made of a material having a predetermined strength to protect multiple components installed inside the outer case. The oven unit may be disposed inside the outer case 10. The oven unit may be shielded by the outer case 10 and the door 50.

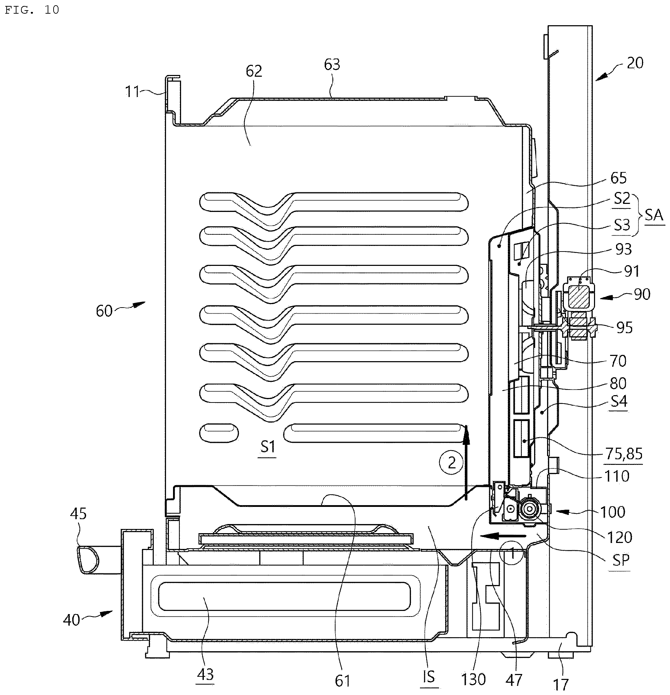

As shown in FIG. 2, the outer case 10 may include a front panel 11, a side panel 12, and a rear panel 20. The front panel 11 is a portion exposed when opening the door 50 and may constitute a front surface of a frame 60. The side panel 12 may cover a left/right surface of the frame 60. Referring to FIG. 10, a lower panel 17 constituting the outer case 10 may be provided at a lower portion of the drawer unit 40.

The front panel 11 may be coupled to a front surface of the frame 60 which will be described below. The front panel 11 may be disposed around edges of an opening of the cooking chamber S1 provided inside the frame 60. When the door 50 is closed, a rear surface of the door 50 may be brought into close contact with the front panel 11.

The side panel 12 may be disposed on either side surface of the frame 60. The side panel 12 may be provided higher than a side surface of the frame 60. Accordingly, an electric chamber 13 may be provided between two side panels 12. The electric chamber 13 may provide a space where electronic components are located, between the cook-top unit 30 and the oven unit. A control panel 55 may be located on a front surface of the electric chamber 13. A structure in which the control panel 55 shields the front surface of the electric chamber 13 may be achieved.

The rear panel 20 may be disposed behind the frame 60. The rear panel 20 may be coupled to the two side panels 12. The rear panel 20 may be disposed to be spaced apart from a rear surface of the frame 60. Accordingly, the rear panel 20 and the rear surface of the frame 60 may be spaced apart from each other. This spacing may be an insulation space S4 (referring to FIG. 10) filled with an insulator. This structure will be described below.

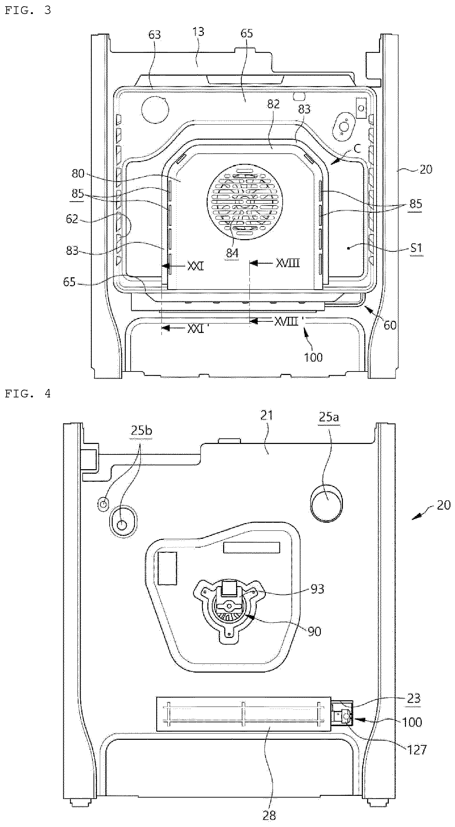

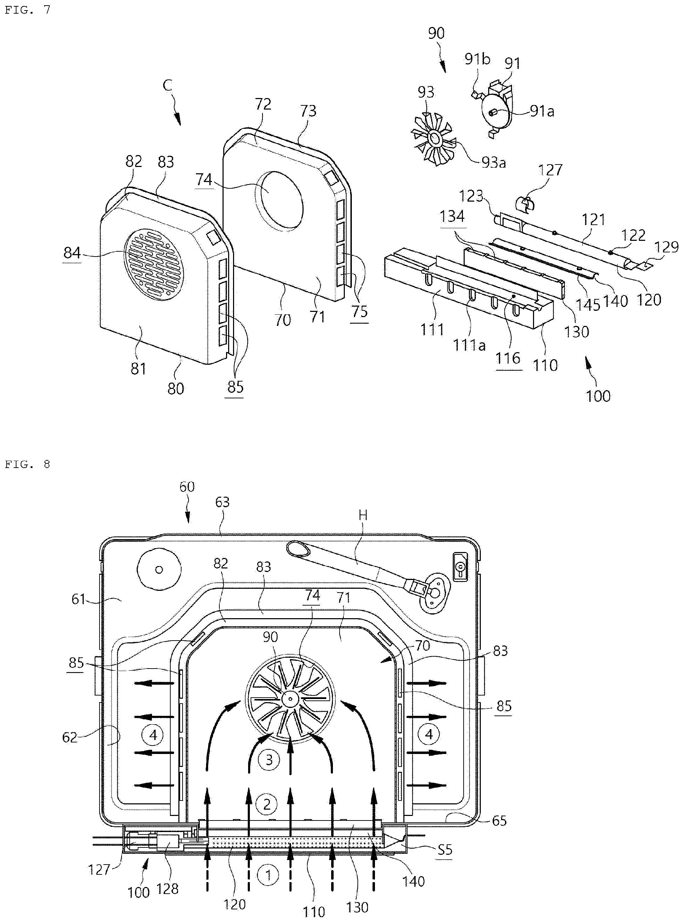

FIG. 4 is a rear view illustrating the rear panel 20. Multiple holes may be provided on a surface of the rear panel 20. A motor (not illustrated) may be installed at some holes 25a of the multiple holes to lock the door 50. Another part 25b of the holes may be connected to a pipe to supply fuel for a broil burner H (referring to FIG. 8) disposed at the upper portion of the cooking chamber S1, or may be a hole for installing a thermistor (not illustrated).

The rear panel 20 may include a panel opening 23. The panel opening 23 may be formed through the rear panel 20. The panel opening 23 may expose a heating device 100 provided inside the outer case 10. The panel opening 23 may be provided at a height equal to the heating device 100. The panel opening 23 may be provided lower than the bottom of the frame 60.

The panel opening 23 may be shielded by a shielding cover 28. FIG. 4 illustrates the panel opening 23 shielded by the shielding cover 28. The shielding cover 28 does not fully shield the panel opening 23 and may allow a part of the panel opening 23 to be open. Through the open portion, a part of the heating device 100 including a nozzle holder 127 to spray gas to the burner 120 may be exposed.

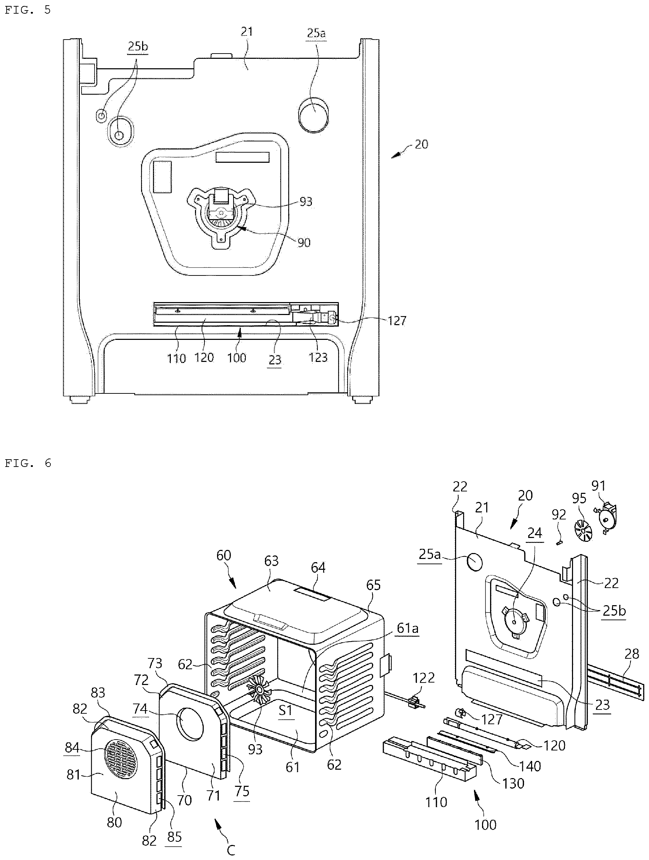

When the shielding cover 28 is removed as illustrated in FIG. 5, more parts of the heating device 100 may be exposed rearward. Most parts of the burner 120 constituting the heating device 100 may be exposed through the panel opening 23. A worker may remove the shielding cover 28 and access the heating device 100 to maintain the heating device 100. Furthermore, the shielding cover 28 is removed, and the burner 120 may be assembled to the heating device 100.

As described below, a burner case 110 includes a chamber opening 118 connected to the panel opening 23, and when the shielding cover 28 is removed, the worker can directly access a combustion chamber S5 which is the inside space of the burner case 110. As another example, the shielding cover 28 may be omitted. As another example, the shielding cover 28 may be coupled to the burner case 110 but not to the rear panel 20. The shielding cover 28 will be described below.

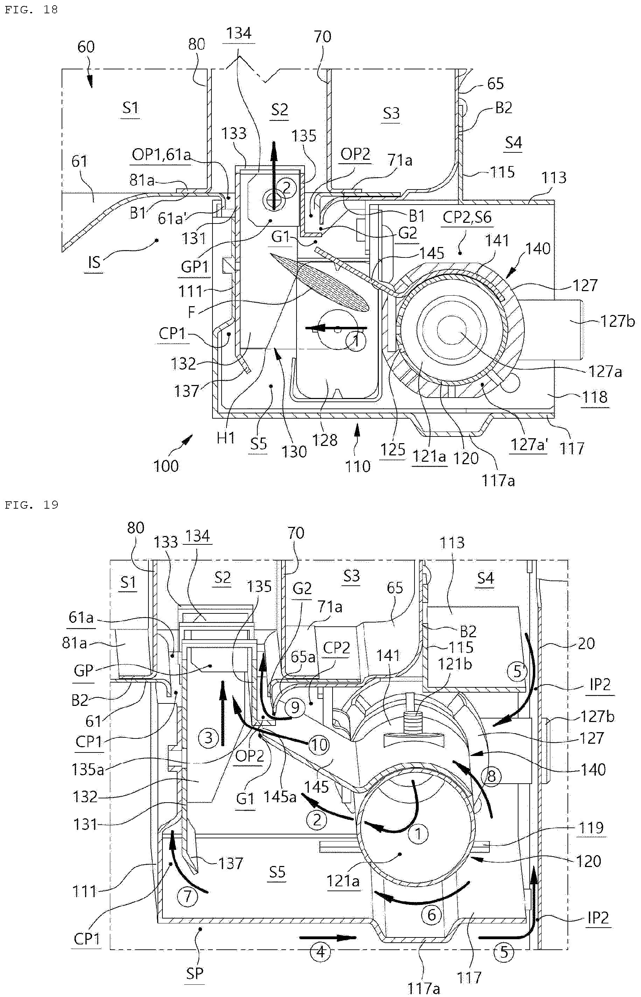

As shown in FIG. 1, the cook-top unit 30 may include multiple cook-top burners 35. The cook-top burners 35 may cook food by heating a container in which food is contained or directly food with flame F (referring to FIG. 18) generated by burning gas. Reference numeral 32 indicates a top grate on which a container, etc. is placed. As another example, the cook-top unit 30 may include one or more electric heaters. As another example, the cook-top unit 30 may include an induction heating (IH) burner using induced current caused by a magnetic field as a heat source. As another example, the cook-top unit 30 may be omitted.

The drawer unit 40 may include a drawer handle 45. The drawer unit 40 may slide forward and rearward from the outer case 10. The drawer unit 40 may keep a container containing food warm at a predetermined temperature. FIG. 10 illustrates a storage space 43 provided inside the drawer unit 40 to store a container, etc. As another example, the drawer unit 40 may be omitted.

As shown in FIG. 1, the control panel 55 may be arranged in front of the cook-top unit 30. The control panel 55 may include a nob 57 to control the cook-top unit 30. The control panel 55 may include an operating part 59 to control the oven unit and the drawer unit 40. The operating part 59 may include a touch panel to display a state of the cooking appliance.

The door 50 may shield the front side of the cooking chamber S1. The door 50 may be operated in a kind of pull-down manner in which an upper end of the door is vertically swung on a lower end. As another example, the door 50 may be operated in a side swing manner in which the door is opened sideward. The door 50 may have a structure that enables the cooking chamber S1 to be visible. For example, a front surface 52 of the door 50 has a glass panel structure, and a user can observe the inside space of the cooking chamber S1 through the door 50. As another example, the cooking chamber S1 may not be visible through the door 50 from the outside space. Reference numeral 53 indicates a handle to open and close the door 50.

Referring to FIG. 2, the bottom surface of the electric chamber 13 may constitute an upper surface portion of the frame 60. The electric chamber 13 may include an exhaust duct 68. The exhaust duct 68 may be provided to discharge combustion gas out of the cooking appliance, the combustion gas being caused in the process of cooking food inside the cooking chamber S1. A lower end of the exhaust duct 68 may be connected to an outlet port 64 open in an upper surface portion of the frame 60, and an upper end thereof may be disposed at an upper portion of a rear surface of the cooking appliance.

In describing the structure of the frame 60 with reference to FIG. 3, the frame 60 may have a rough hexahedral structure. The cooking chamber S1 may be provided inside the frame 60. The cooking chamber S1 may have a rough hexahedral structure as with the frame 60. The frame 60 may be opened and closed by the outer case 10 and the door 50. Most of the surface of the frame 60 excluding the cooking chamber S1 may be covered by the outer case 10.

The frame 60 may include a frame lower surface part 61 constituting the bottom surface of the cooking chamber S1, a frame side surface 62 constituting the cooking chamber S1, a frame upper surface 63 constituting an upper surface of the cooking chamber S1, and a frame rear surface part 65 constituting a rear surface of the cooking chamber S1. In addition, a front surface of the frame 60 is open, and the cooking chamber S1 may be exposed.

A circulation device C, which will be described below, may be disposed inside the frame 60. Herein, the inside space of the frame 60 is a space surrounded by the frame lower surface part 61, the frame side surface 62, the frame upper surface 63, and the frame rear surface part 65. The cooking chamber S1 may also be provided inside the frame 60. The cooking chamber S1 may be provided in front of the circulation device C.

Meanwhile, the heating device 100, which will be described below, may be arranged outside the frame 60. Herein, the outside space of the frame 60 is the outside space of the space surrounded by the frame lower surface part 61, the frame side surface 62, the frame upper surface 63, and the frame rear surface part 65. As described above, the circulation device C and the heating device 100 may be arranged inside and outside the frame 60.

Referring to FIG. 3, when the door 50 is opened, the cover plate 80 constituting the circulation device C, which will be described below, may be exposed inside the cooking chamber S1. The cover plate 80 may be disposed in front of the frame rear surface part 65 constituting the rear surface of the cooking chamber S1. The cover plate 80 is coupled to the frame rear surface part 65 and may cover a partition plate 70 and a circulation fan 93. As described above, the circulation device C is arranged inside the cooking chamber S1 and may circulate air in the cooking chamber S1. For reference, a suction hole 84 of the cover plate 80 sucks internal air of the cooking chamber S1, and second discharge holes 85 are provided to discharge heated air into the cooking chamber S1.

As illustrated in FIG. 3, the heating device 100 may be arranged at a lower portion of the frame 60. More specifically, the heating device 100 may be arranged lower than the frame lower surface part 61. The circulation device C is arranged inside the cooking chamber S1, but the heating device 100 is arranged at the lower portion of the frame 60 which is the outside part of the cooking chamber S1. Referring to FIG. 10, the heating device 100 may be arranged between the frame lower surface part 61 and a drawer cover 47 constituting an upper surface of the drawer unit 40. When the drawer unit 40 is omitted, the heating device 100 may be arranged between the frame lower surface part 61 and the lower panel 17.

FIG. 7 is an exploded view illustrating the rear panel 20, the frame 60, the circulation device C, and the heating device 100 of the present invention. The circulation device C may suck internal air of the cooking chamber S1 and mix the air with high-temperature air supplied from the heating device 100. The circulation device C may discharge the mixed air into the cooking chamber S1. The processes are performed simultaneously and continuously, and the internal air of the cooking chamber S1 may be circulated.

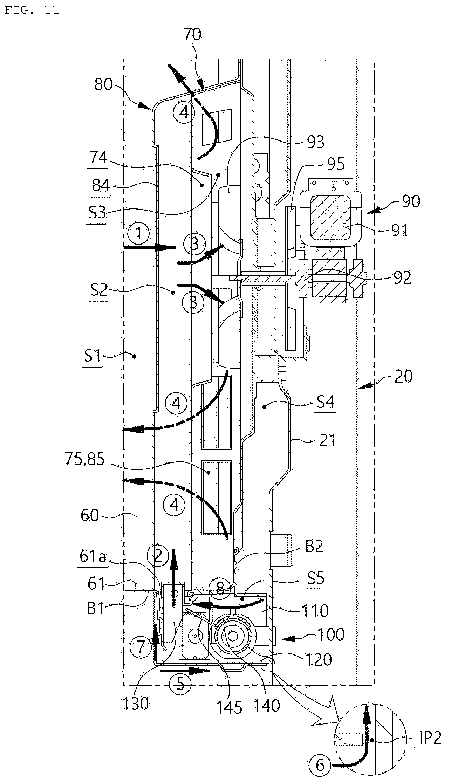

The circulation device C and the heating device 100 may be connected to each other via a connection passage 61a (referring to FIG. 11) provided in the frame 60. The connection passage 61a is formed through the frame lower surface part 61. Based on the connection passage 61a, the circulation device C may be arranged above the connection passage 61a, and the heating device 100 may be arranged below the connection passage 61a. The connection passage 61a may be provided at a rear portion of the frame lower surface part 61 which is close to the frame rear surface part 65. As another example, the connection passage 61a may be provided at either side portion of the frame lower surface part 61 which is close to the frame side surface 62. As another example, the connection passage 61a may be provided in the frame side surface 62. In this case, the heating device 100 may be arranged at a position opposite to the circulation device C with the frame side surface 62 located therebetween.

The circulation device C may be arranged inside the cooking chamber S1. The circulation device C is arranged in front of the rear panel 20. The circulation device C may be at the rear side of the cooking chamber S1 and suck air from the front side of the cooking chamber S1 rearward (referring to X-axial direction in FIG. 1), and then discharge the air sideward. The circulation device C includes the circulation fan 93 to serve the suction and discharge functions. However, as described below, The heating device 100 may raise heated air by natural draft. Therefore, even when the circulation fan 93 does not operate, the heated air may be supplied to the cooking chamber S1.

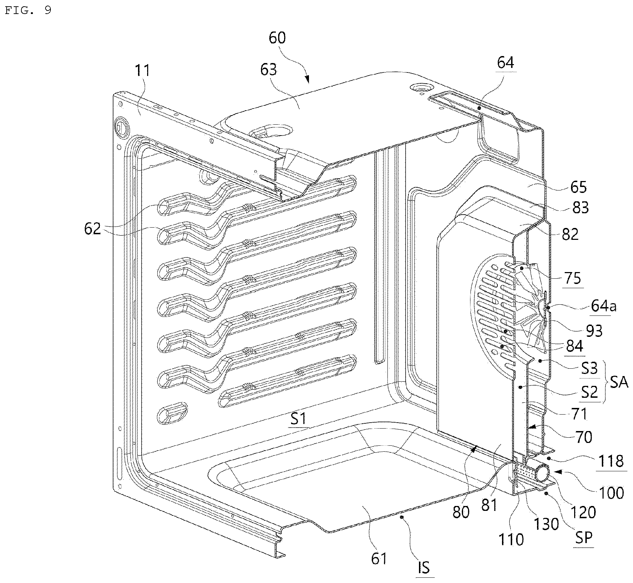

Referring to FIG. 9, a circulation chamber SA may be provided inside the circulation device C. The circulation chamber SA may be connected to the cooking chamber S1. In the circulation chamber SA, air introduced from the cooking chamber S1 may exchange heat with air heated by the heating device 100. The heat-exchanged air may be discharged back to the cooking chamber S1.

The circulation chamber SA may form an upper flow path connected to the cooking chamber S1. The upper flow path may be a path through which air is sucked from the cooking chamber S1 and discharged back to the cooking chamber S1. The combustion chamber S5 inside the heating device 100, which will be described below, may form a lower flow path that transfers air heated by the burner 120 to the upper flow path. At this point, the upper flow path and the lower flow path may be connected to each other in a height direction of the frame 60 via the connection passage 61a formed in the frame lower surface part 61. Herein, the height direction of the frame 60 is a vertical direction based on the drawing and is a Z-axial direction in FIG. 1. This flow path structure will be described below in detail.

The circulation device C may include the partition plate 70 and the cover plate 80. The cover plate 80 may be arranged in front of the rear panel 20. The partition plate 70 may be arranged between the cover plate 80 and the rear panel 20. The partition plate 70 and the cover plate 80 have similar shapes, and the size of the cover plate 80 may be larger than the size of the partition plate 70. The cover plate 80 may be coupled to the frame rear surface part 65 while covering and shielding the partition plate 70.

The partition plate 70 is made of a metal material, and a partition body 71 may form a frame of the partition plate 70. The partition body 71 may have a rough flat structure. A partition bending part 72 may be provided at an edge of the partition body 71. The partition plate 70 may have a front-rear directional thickness by the partition bending part 72. A partition coupling end 73 provided at an end of the partition bending part 72 may be coupled to the frame rear surface part 65 while overlapping with a cover coupling end 83 of the cover plate 80.

A communication hole 74 may be open in the partition body 71. The communication hole 74 may be formed through the partition body 71 in a front-rear direction. The communication hole 74 may have a rough circular structure. The communication hole 74 may be connected to the suction hole 84 of the cover plate 80. To this end, the communication hole 74 may be provided at a position corresponding to a position behind the suction hole 84. The circulation fan 93 is arranged in the communication hole 74, so the communication hole 74 may be considered a fan installation space.

Multiple first discharge holes 75 may be formed in the partition bending part 72. The first discharge holes 75 may be formed through the partition bending part 72. The first discharge holes 75 may be open in directions different from an open direction of the communication hole 74. The first discharge holes 75 may be open sideward. The first discharge holes 75 may be connected to the second discharge holes 85 of the cover plate 80. The air heated by the heating device 100 may be supplied into the cooking chamber S1 via the first discharge holes 75 and the second discharge holes 85.

The partition plate 70 may partition a space between the cover plate 80 and the frame rear surface part 65. The circulation chamber SA may be provided between the partition plate 70 and the frame rear surface part 65. The circulation chamber SA may be divided into two parts by the partition plate 70. More specifically, as illustrated in FIG. 9, the circulation chamber SA may be divided into a front heating chamber S2 closer to the cooking chamber S1 on the basis of the partition plate 70, and a rear discharge chamber S3. Herein, the heating chamber S2 may be a space where air heated by the heating device 100 and air sucked from the cooking chamber S1 are mixed together. The discharge chamber S3 may be a space where the air mixed in the heating chamber S2 is discharged back to the cooking chamber S1. Part of the air in the cooking chamber S1 may flow directly into the discharge chamber S3. However, when the circulation fan 93 is operated, most of the air in the discharge chamber S3 may be discharged to the cooking chamber S1.

The cover plate 80 is made of a metal material, and a cover body 81 may form a frame of the cover plate. The cover body 81 may have a rough flat structure. A cover bent part 82 may be provided at an edge of the cover body 81. The cover plate 80 may have a front-rear directional thickness by the cover bent part 82. The cover coupling end 83 provided at the end of the cover bent part 82 may be coupled to the frame rear surface part 65 while overlapping with the partition coupling end 73 of the partition plate 70.

Meanwhile, a lower end of the cover plate 80 and a lower end of the partition plate 70 may be respectively supported by the frame 60. The structure in which the lower end of the cover plate 80 and the lower end of the partition plate 70 are supported by the frame 60 will be described in detail when a structure in which the heating device 100 is supported by the frame 60 will be described below.

The cover plate 80 is coupled to the frame rear surface part 65 while covering the partition plate 70, so the partition plate 70 may be shielded by the cover plate 80. As illustrated in FIG. 3, when the cooking chamber S1 is seen from the front space, only the cover plate 80 is exposed.

The suction hole 84 may be open in the cover body 81. The suction hole 84 may be formed through the cover body 81 in the front-rear direction. The suction hole 84 may be a hole for sucking air in the cooking chamber S1. The air sucked through the suction hole 84 may flow into the heating chamber S2. The suction hole 84 has a rough circular structure. The suction hole 84 may have a louver form, and an inside part of the suction hole 84, i.e., most of the structure of the partition plate 70 may be shielded. As another example, the suction hole 84 may have a simple circular hole as with the communication hole 74 or may have different forms other than a circular form.

The suction hole 84 may be connected to the communication hole 74 of the partition plate 70. To this end, the suction hole 84 may be provided at a position corresponding to a position in front of the communication hole 74. The circulation fan 93 is arranged behind the suction hole 84, and air may be sucked through the suction hole 84.

The cover bent part 82 may include the multiple second discharge holes 85. The second discharge holes 85 may be formed through the cover bent part 82. Each of the second discharge holes 85 may be open in directions different from a direction in which the suction hole 84 is open. The second discharge holes 85 may be open sideward. The second discharge holes 85 may be connected to the first discharge holes 75 of the partition plate 70. The air heated by the heating device 100 may be supplied into the cooking chamber S1 via the first discharge holes 75 and the second discharge holes 85.

The first discharge holes 75 and the second discharge holes 85 may be respectively provided in side surfaces and inclined surfaces of the partition bending part 72 and the cover bent part 82. As another example, the first discharge holes 75 and the second discharge holes 85 may be respectively provided in upper surfaces and lower surfaces of the partition bending part 72 and the cover bent part 82.

FIG. 8 illustrates the cover plate 80 in which a part is cut off. The circulation fan 93 may be provided inside the cover plate 80. When the circulation fan 93 is operated, external air may be induced toward the heating device 100 (direction of arrow ①). The heated air passing through the heating device 100 may be raised toward the circulation device C (direction of arrow ②). Due to a suction force of the circulation fan 93, air transferred toward the circulation fan 93 (direction of arrow ③) may be discharged outward by rotation of the circulation fan 93 (direction of arrow ④), that is, discharged into the cooking chamber S1.

As described above, the heating device 100 may be arranged at a lower portion of the circulation device C. Air heated by the heating device 100 may be (i) raised by the suction force of the circulation fan 93, and (ii) may be raised by natural draft. That is to say, when the temperature of air increases by the heating device 100, the volume of the air expands, the density is lowered, and a buoyant force increases, so air raises. A specific structure related to the circulation of air will be described below.

The circulation fan 93 may be coupled to a fan motor 91 to constitute a fan assembly 90. The fan assembly 90 may include the fan motor 91, the circulation fan 93, a rotation shaft 92, and a motor cooling fan 95. At this point, the fan motor 91 and the motor cooling fan 95 may be arranged outside the outer case 10. More specifically, the fan motor 91 and the motor cooling fan 95 may be arranged on a rear surface of the rear panel 20 constituting the outer case 10. Referring to FIG. 5, the fan motor 91 arranged at the rear panel 20 and exposed rearward is illustrated.

As illustrated in FIG. 7, the fan motor 91 may include a motor central part 91a at a central portion thereof, and a rotation shaft 92 is coupled to the motor central part 91a. The fan motor 91 includes a fan bracket 91b, and the fan bracket 91b may be fixed to the rear panel 20. The motor cooling fan 95 may rotate coaxially with the circulation fan 93 by the rotation shaft 92. The motor cooling fan 95 may cool the fan motor 91. As another example, the motor cooling fan 95 may be omitted.

As illustrated in FIG. 8, the circulation fan 93 may be arranged in front of the frame rear surface part 65. The circulation fan 93 may be arranged opposite to the motor cooling fan 95 and the fan motor 91, with the frame rear surface part 65 and the rear panel 20 located therebetween. The rotation shaft 92 may pass through a panel through hole 24 of the rear panel 20 and a shaft through hole (not illustrated) of the frame rear surface part 65, and then connect the circulation fan 93 to the fan motor 91.

As illustrated in FIG. 9, the circulation fan 93 may be arranged inside the circulation chamber SA. The circulation fan 93 may be considered a part of the circulation device C. Furthermore, the entire part of the fan assembly 90 may be considered a part of the circulation device C. As another example, the fan assembly 90 may not be arranged at the rear panel 20 and may be arranged at the side panel 12 or the upper panel. As another example, the fan assembly 90 may be omitted.

Next, in describing the heating device 100, the heating device 100 may be configured to heat air. The heating device 100 may be configured (i) to heat air introduced from the outside space, and (ii) to heat air inside the cooking chamber S1. The heating device 100 may be arranged outside the cooking chamber S1, and mostly air introduced from the outside space is heated. However, when part of the internal air of the cooking chamber S1 flows into the heating device 100, the heating device 100 may heat the internal air.

The heating device 100 may be arranged outside the frame 60. The heating device 100 may be arranged below the frame lower surface part 61. Referring to FIG. 10, the heating device 100 may be arranged between the frame lower surface part 61 and the lower panel 17. More specifically, the heating device 100 may extend in one direction along a rear edge of the lower portion of the frame 60.

Referring to FIG. 10, an installation space IS may be provided between the frame lower surface part 61 and the lower panel 17. The heating device 100 may be arranged inside the installation space IS. The heating device 100 may be arranged at a rear portion of the installation space IS, that is, at a position close to the rear panel 20.

As described above, when the heating device 100 is arranged outside the frame 60, intrusion of the heating device 100 into the cooking chamber S1 is prevented. Therefore, the space in the cooking chamber S1 is not reduced due to the heating device 100 and may be widened. Specifically, a heating component such as the burner 120 is omitted in the circulation device C, and a component such as a burner reflector for assisting a heating component is omitted. Therefore, a rear space of the cooking chamber S1 may be widened.

The installation space IS is an empty space. Therefore, even when the heating device 100 is arranged therein, the entire size of the cooking appliance is prevented from increasing. Furthermore, the installation space IS may be an external air introduction part into which external air is introduced. Accordingly, air introduced through the installation space IS may cool a lower surface of the heating device 100 during the introduction process. This structure will be described below.

Referring to FIG. 10, the burner 120 provided at the heating device 100 may generate flame forward, that is, generate flame in a direction toward the door 50 (direction of arrow ①). Herein, a direction in which the burner 120 generates flame may be a first direction. In addition, the circulation device C and the heating device 100 may be arranged in a second direction (direction of arrow ②) different from the first direction. Therefore, flame caused by the heating device 100 may heat air in a front space in the heating device 100 (the combustion chamber S5, referring to FIG. 18), and the heated air may move upward to the heating chamber S2. The first direction and the second direction may be formed to be orthogonal to each other. As another example, the first direction may be a direction a direction inclined upward from the horizontal direction.

Referring to FIG. 11, an air flow caused by the circulation device C and the heating device 100 may be indicated by arrows. First, in the air flow caused by the circulation device C, when the circulation fan 93 is operated, the air in the cooking chamber S1 may be sucked a direction toward the circulation fan 93 (direction of arrow ①).

At the same time, air in the combustion chamber S5 heated by the heating device 100 is raised in the direction of the heating chamber S2 of the circulation device C (direction of arrow ②). The heated air raised to the heating chamber S2 may be mixed with the air that is sucked from the cooking chamber S1. At this point, the temperature of the air sucked from the cooking chamber S1 is relatively low, and the temperature of the air raised from the heating device 100 is relatively high as the air is heated. When the two types of air are mixed and exchange heat with each other, the temperature of the mixed air may be higher than the temperature of the air introduced from the cooking chamber S1.

At this point, as described above, the air heated by the heating device 100 may be raised by natural draft in the direction toward the heating chamber S2 of the circulation device C (direction of arrow ②). Therefore, even when the circulation fan 93 is not operated, the heated air may be supplied to the cooking chamber S1.

The mixed air passes through the communication hole 74 of the partition plate 70 and moves to the discharge chamber S3 (direction of arrow ③). The air entering the discharge chamber S3 may be discharged back to the cooking chamber S1 through the first discharge holes 75 and the second discharge holes 85 connected to each other (direction of arrow ④). At this point, the discharge of the mixed air into the cooking chamber S1 may be achieved by operation of the circulation fan 93 but may be achieved by a pressure difference due to the air raised from the combustion chamber S5 by natural draft.

Meanwhile, when the burner 120 is operated to heat the air of the combustion chamber S5, the heating device 100 may be overheated. Furthermore, the frame 60 arranged at an upper portion of the heating device 100 may be deformed by high-temperature heat or an enamel coating layer of the frame 60 may be damaged. To prevent the above problem, the heating device 100 and the frame 60 may be cooled using external air.

Referring to FIG. 11, external air passing through the lower part of the heating device 100 may be indicated by an arrow of ⑤. The external air may move along a lower surface of the heating device 100. The external air may be a secondary air supplied to the burner 120 and may perform the cooling function.

The external air cooling the lower surface of the heating device 100 while passing through the lower surface of the heating device 100 may be introduced into the heating device 100 (direction of arrow 60). More specifically, as illustrated in the enlarged view of FIG. 11, air may be introduced into the heating device 100 through a second inlet part IP2, that is, a gap formed between the heating device 100 and the rear panel 20.

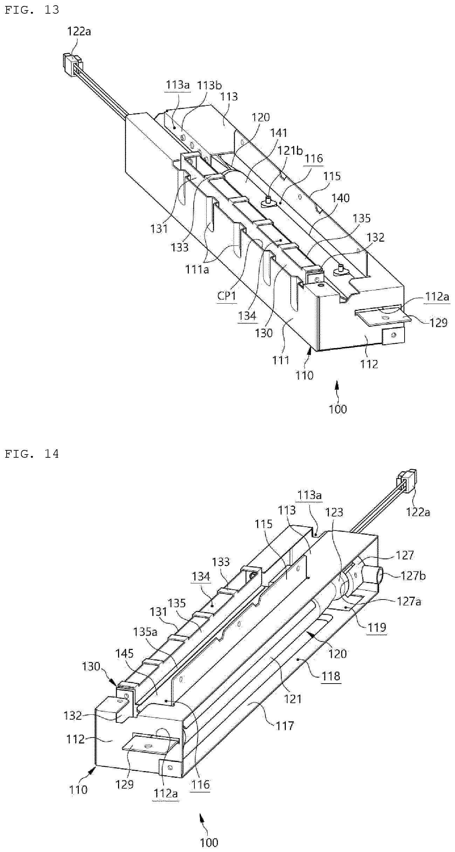

Some of the air may be heated by the heating device 100 to move to the heating chamber S2, and another part may move along the cooling flow path CP1, CP2 (referring to FIG. 18) partitioned by a flow path guide 130 of the heating device 100. More specifically, part of the air for cooling moves along a lower portion of the burner 120 inside the heating device 100 and then is raised through a space CP1 formed by spacer parts 111a (referring to FIG. 13). In this process, the lower surface of the heating device 100, and a front surface of the heating device 100, and the lower portion of the frame 60 may be prevented from being overheated (referring to direction of arrow ⑦).

At this point, another part of the air for cooling may move along an upper portion of the burner 120 and may prevent overheating of the upper surface of the heating device 100, the flame guide 140, and the lower portion of the frame 60 (referring to direction of arrow ⑧). At this point, the air flowing into the upper portion of the cooking chamber S1 (arrow ⑧) may be introduced through another second inlet part IP2 provided at the upper portion of the heating device 100 (referring to arrow ⑤' of FIG. 19). This structure will be described below.

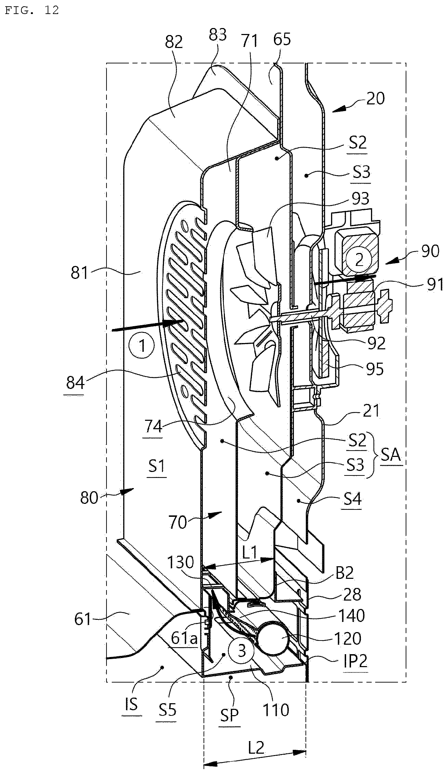

Referring to FIG. 12, the internal structure of the circulation device C and the heating device 100 is illustrated. Air sucked through the suction hole 84 of the cover plate 80 may enter the heating chamber S2 (direction of arrow ①), and the heating chamber S2 is filled with air heated by the heating device 100. Accordingly, the air of the cooking chamber S1 may be heated in the process in which the air moves toward the communication hole 74 while passing through the suction hole 84. Meanwhile, the motor cooling fan 95 constituting the fan assembly 90 may rotate with the circulation fan 93, discharge air toward the fan motor 91 (direction of arrow ②), and cool the fan motor 91.

Flame generated by the burner 120 may heat air in the combustion chamber S5. At this point, a generation direction of flame generated from the burner 120 may be guided by the flame guide 140 that will be described below. Arrow ③ indicates a direction in which the flame is guided by the flame guide 140. The direction may be naturally directed to the heating chamber S2. More specifically, the air in the combustion chamber S5 heated by the heat of combustion may pass through a flow path formed by the flame guide 140 and the flow path guide 130 that will be described below. In addition, the air raised along the flow path may pass through the connection passage 61a provided on the frame lower surface part 61 and move to the heating chamber S2.

A front-rear length L2 of the heating device 100 is longer than a front-rear length L1 of the lower portion of the circulation device C. Herein, the front-rear direction is a direction from the door 50 toward the frame rear surface part 65. That is to say, the front-rear direction is a direction in which the cover plate 80 and the partition plate 70 are coupled to each other, and considered a shaft direction of the rotation shaft 92.

When the front-rear length of the heating device 100 is longer than the front-rear length of the lower portion of the circulation device, the upper area of the circulation device C may be entirely included in the upper area of the heating device 100. As illustrated in FIG. 12, the entire lower portion of the circulation device C may be overlapped with the upper portion of the heating device 100. Accordingly, the front-rear length of the circulation device C and the heating device 100 may be the front-rear length of the heating device 100. Therefore, in the cooking appliance, the front-rear length occupied by the circulation device C and the heating device 100 may be minimized.

Furthermore, when the entire lower portion of the circulation device C overlaps with the upper portion of the heating device 100, a transfer path between the combustion chamber S5 and the circulation chamber SA may be minimized. When the transfer path between the combustion chamber S5 and the circulation chamber SA is shortened, heat loss is reduced, and the efficiency of the cooking appliance is increased. In addition, the discharge chamber S3 is arranged to overlap with the combustion chamber S5, so heat of the combustion chamber S5 may be conducted to the discharge chamber S3. The conducted heat heats air in the discharge chamber S3 to increase heat efficiency of the cooking appliance.

The upper portion of the heating device 100 overlaps with the lower portion of the circulation device C, and may not overlap with the bottom of the cooking chamber S1. This prevents heat in the heating device 100 from directly heat the bottom surface of the cooking chamber S1 and simultaneously enables heat of the heating device 100 to be focused on the circulation device C.

Referring to FIG. 11, based on an extension direction of a flow path in which the combustion chamber S5 and the heating chamber S2 are connected to each other, the burner 120 may be arranged in a position that deviates from a range in which the burner overlaps with the heating chamber S2. At this point, the extension direction of the flow path may be the vertical direction, that is, a direction in which the circulation device C and the heating device 100 are stacked. Based on the extension direction of the flow path, the burner 120 is arranged to be biased rearward, that is, toward the rear panel 20, thereby preventing the burner 120 and the heating chamber S2 from overlapping with each other.

Based on the extension direction of the flow path in which the combustion chamber S5 and the heating chamber S2 are connected to each other, the entire part or a part of the burner 120 may be arranged at a position where the burner 120 overlaps with the discharge chamber S3. As illustrated in FIG. 11, a part of the burner 120 may be arranged to overlap with the discharge chamber S3 vertically.

The heating device 100 may protrude rearward, that is, toward the rear panel 20, more than the circulation device C. Referring to FIGS. 11 and 12, the heating device 100 protrudes to a position very adjacent to a surface of the rear panel 20, but the circulation device C may be relatively spaced apart from the surface of the rear panel 20 forward (the left side based on the drawing). As described above, an extension part (not given reference numeral) where the heating device 100 further protrudes than the circulation device C may be used as an inflow space to introduce external air into the heating device 100. Through an upper portion and a lower portion of the extension part where the heating device 100 protrudes further than the circulation device C, external air may be efficiently introduced into the combustion chamber S5. As described below, a portion where the heating device 100 and the rear panel 20 face each other may be formed at a predetermined distance to form an introduction path, and external air may be introduced into the combustion chamber S5 through the introduction path.

Referring to FIGS. 13 to 17, the heating device 100 will be described. The heating device 100 may include the combustion chamber S5 therein, and the combustion chamber S5 may include the burner 120. The burner 120 may generate flame using gas and heat air in the combustion chamber S5. The heating device 100 may heat air in the combustion chamber S5 and transfer the heated air to the heating chamber S2.

At this point, the combustion chamber S5 may form the lower flow path through which air heated by the burner 120 to the upper flow path. The upper flow path may be considered an air transfer path inside the circulation chamber SA. The upper flow path and the lower flow path may be connected to each other in a height direction of the frame 60 through the connection passage 61 a provided in the frame lower surface part 61.

The burner case 110 may form a frame of the heating device 100. The burner case 110 may have a rough hexahedral structure. The burner case 110 may be made of a metal material having high heat-resistance. A part of an upper surface and a rear surface of the burner case 110 may be open. The open portion of the upper surface of the burner case 110 may be covered by the frame lower surface part 61. The open rear surface of the burner case 110 has the chamber opening 118, and the chamber opening 118 may be covered by the shielding cover 28 described above. This structure will be described below.

In describing the structure of the burner case 110, the burner case 110 may include a front plate 111 constituting a front surface of the combustion chamber S5. The burner case 110 may include side plates 112 providing side surfaces of the combustion chamber S5. The burner case 110 may include an upper plate 113 providing an upper surface of the combustion chamber S5. The burner case 110 may include a lower plate 117 providing a bottom surface of the combustion chamber S5. The front plate 111, the side plates 112, the upper plate 113, and the lower plate 117 may be formed by bending one metal sheet. As another example, the burner case 110 may be formed of multiple parts that are coupled to each other in a method such as welding or assembled with each other by a fastener such as a screw.

The front plate 111 may include the spacer part 111a. The spacer part 111a may be formed of a part of the front plate 111 protruding inward of the combustion chamber S5. The spacer part 111a may form an uneven structure on a section of the front plate 111. The multiple spacer parts 111a may be arranged in a longitudinal direction of the front plate 111, that is, at intervals in an extension direction of the burner 120.

The spacer part 111a may be in close contact with a guide front surface part 131 of the flow path guide 130 arranged in the combustion chamber S5. A gap between one spacer part 111a and another spacer part 111a adjacent thereto is spaced apart from the guide front surface part 131 to form a passage. The passage may be a cooling flow path CP1. When some of external air introduced into the combustion chamber S5 which is not heated by the burner 120 or air at the bottom side of the combustion chamber S5 which is less affected by the burner 120 is raised through the cooling flow path CP1, the air may cool not only the front plate 111 and a surface of the flow path guide 130 but also the frame lower surface part 61. The cooling flow path CP1 may be referred to as the first cooling flow path CP1 to distinguish it from a cooling flow path CP2 which is a different path described below.

The spacer part 111a may extend to an upper end of the front plate 111 and may be provided only to the upper portion rather than a lower end of the front plate 111. Referring to a path indicated by arrow ⑦ of FIG. 19, a continued path may be formed from a portion where a front portion of the lower plate 117 and a lower portion of the front plate 111 without the spacer part 111a are connected to each other, to the first cooling flow path CP1 provided between a surface of the guide front surface part 131 and a rear surface of the front plate 111. External air may pass through the path. As another example, the spacer part 111a may protrude from the guide front surface part 131 toward the front plate 111, rather than the front plate 111.

As described above, a part of the cooling flow path CP1, CP2 may be formed in a height direction of the combustion chamber S5 between the surface of the burner case 110 and the surface of the flow path guide 130 facing each other.

Referring to FIG. 13, each side plate 112 may include a bracket hole 112a through which a bracket part 129 of the burner 120 passes. The bracket part 129 passing through the bracket hole 112a may be fixed to the frame 60. For reference, the burner 120 may remain fixed by the bracket part 129 and a burner fixation piece 128 of the burner 120 which will be described below.

The upper plate 113 may include an interference avoidance part 113a. The interference avoidance part 113a may be formed such that a part of the upper plate 113 is omitted to expose the combustion chamber S5. The interference avoidance part 113a may be provided to prevent interference with a structure (no illustrated) protruding from a lower portion of the frame 60.

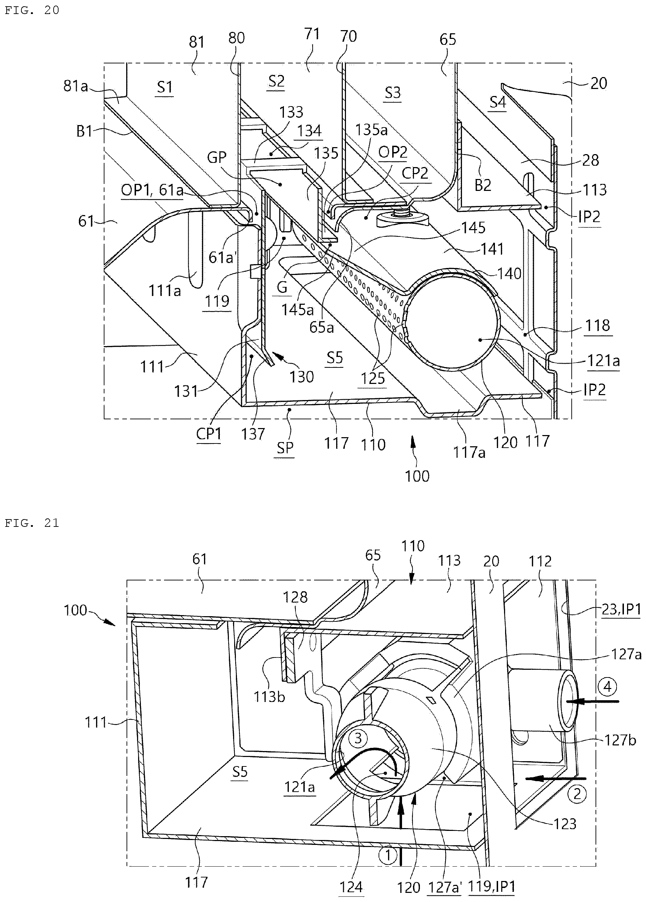

At this point, to form the interference avoidance part 113a, a part of the upper plate 113 may be cut and then bent downward. The bent portion may be a fixation rib 113b. Referring to FIG. 21, the burner fixation piece 128 provided at the burner 120 may be coupled to the fixation rib 113b. Eventually, one end portion of the burner 120 may be supported by the fixation rib 113b.

The upper plate 113 may include the upper opening 116 at a portion adjacent to the interference avoidance part 113a. The upper opening 116 may have a form in which a part of the upper plate 113 is vertically open. The upper opening 116 may be formed in a long shape along in the extension direction of the burner 120. The upper opening 116 may be formed of a portion of the upper plate 113 cut and then bent upward.

The upper opening 116 may be covered with the frame rear surface part 65. Referring to FIG. 19, a portion bent forward from a lower end of the frame rear surface part 65 may cover the upper opening 116. The portion bent forward from the lower end of the frame rear surface part 65 may overlap with an upper portion of the frame lower surface part 61. The end of the frame rear surface part 65 may be bent downward to form a flow path entrance end 65a. A structure of the flow path entrance end 65a will be described below.

A part of the upper plate 113 is bent to form a case supporter 115. As the case supporter 115 is bent, a space may be the upper opening 116. The case supporter 115 may fix the heating device 100 to the frame 60. As the case supporter 115 is coupled to the frame 60, the heating device 100 may be supported by the frame 60. Referring to FIGS. 18 and 10, the case supporter 115 in close contact with the frame rear surface part 65 is illustrated. In this state, a fastener such as a screw (not illustrated) may fix the case supporter 115 to the frame 60. Reference numeral B2 is a second coupling part where the case supporter 115 is coupled to the frame rear surface part 65. As described above, the heating device 100 may be supported by being coupled to the frame 60.

More specifically, the heating device 100 may be coupled to a first surface among surfaces of the frame rear surface part 65, the first surface facing the rear panel 20. On the other hand, the circulation device C may be fixed to a second surface among surfaces of the frame rear surface part 65, the second surface facing the cooking chamber S1. As described above, the circulation device C may be fixed to a first surface among wall surfaces of the frame 60, the first surface facing the cooking chamber S1, to provide a first coupling part B1. The heating device 100 may be fixed to a second surface of the frame 60 opposite to the first surface to provide the second coupling part B2.

More specifically, as described above, the circulation device C may also be fixed to the frame 60. The cover coupling end 83 provided at the end of the cover bent part 82 is coupled to the frame rear surface part 65 while overlapping with the partition coupling end 73 of the partition plate 70. At the same time, the lower end portion of the partition plate 70 and the lower end portion of the cover plate 80 may be supported by the frame 60. Referring to FIG. 18, a lower end bent portion 71a of the partition plate 70 may be in close contact with an upper portion of the frame rear surface part 65 to provide the first coupling part B1 (referring to FIG. 19). Furthermore, a lower end bent portion 81a of the cover plate 80 may be in close contact with the frame lower surface part 61 to provide the first coupling part B1.

As described above, the heating device 100 and the circulation device C are coupled to the frame 60 to be supported. The circulation device C and the heating device 100 are fixed to the surfaces of the frame 60 at different positions. The heating device 100 is supported by the frame 60, so the heating device 100 may not depend on the circulation device C for mounting thereof. Accordingly, the heating device 100 may not be in direct contact with the circulation device C. That is to say, while the surface of the circulation device C and the surface of the heating device 100 are in non-contact with each other, the heating device 100 may be fixed to the frame 60. Accordingly, the amount of which radiant heat generated from the surface of the heating device 100 is transferred to the circulation device C is reduced, and flame of the burner 120 may be focused to heat air in the combustion chamber S5.

Referring to FIG. 14, the rear surface of the burner case 110 is open, and the chamber opening 118 may be formed. The chamber opening 118 may be shaped in a rough rectangle around the edges of the upper plate 113, the lower plate 117, and the side plates 112. The chamber opening 118 may be open toward the rear panel 20. The chamber opening 118 is connected to the panel opening 23 of the rear panel 20 but may be covered by the shielding cover 28.

Referring to FIG. 19, the lower plate 117 may include an uneven part 117a. The uneven part 117a is arranged at a lower portion of the burner 120. The uneven part 117a may be formed into a shape in which a part of the lower plate 117 is bent. The uneven part 117a increases the strength of the lower plate 117 to prevent the lower plate 117 from being deformed due to high-temperature of the combustion chamber S5.

The uneven part 117a may expand a contact area between the burner case and external air passing through the lower portion of the burner case 110. The external air passing through the burner case 110 performs heat exchange by being brought into contact with the uneven part 117a, and in this process, the lower plate 117 and the burner case 110 may be cooled. The external air is naturally introduced into the combustion chamber S5 which is a relatively low pressure, and the external air may pass through the lower plate 117 in this state.

An air inlet passage SP may be formed below the lower plate 117. The air inlet passage SP may be formed between the frame lower surface part 61 and the drawer cover 47 or the frame lower surface part 61 and the lower panel 17. The air inlet passage SP is a kind of space and may be considered a part of the installation space IS. The air inlet passage SP may be a path through which external air is induced into the heating device 100.

In FIG. 19, an arrow ④ indicates a flow direction of external air that passes through the uneven part 117a and cools the lower plate 117. The external air may pass through the air inlet passage SP and be brought into contact with the lower plate 117. As described above, the air cooling the lower plate 117 moves continuously along the air inlet passage SP, and may enter the combustion chamber S5 through the second inlet part IP2, that is, a gap between the burner case 110 and the rear panel 20. This structure will be described below.

The frame lower surface part 61 may include a combustion air hole 119. The combustion air hole 119 may be formed vertically through the frame lower surface part 61. The combustion air hole 119 may be connected to a holder air hole 127a' of the nozzle holder 127 which will be described below. Air introduced through the combustion air hole 119 may be supplied to the nozzle through the holder air hole 127a' and may be used in a primary combustion of gas. Therefore, the combustion air hole 119 may constitute a first inlet part.

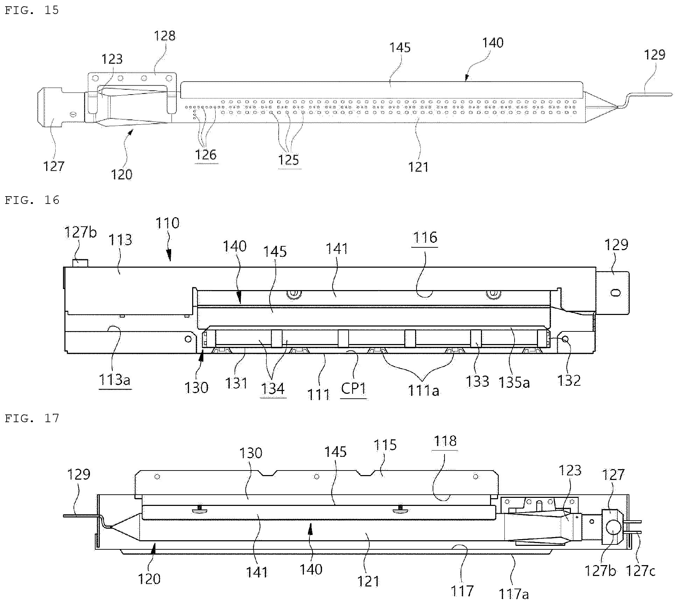

Next, referring to FIG. 15, the burner 120 constituting the heating device 100 will be described. For reference, in FIG. 15, the view illustrates the flame guide 140 to be described below coupled to the burner 120. As described above, the burner 120 may be a linear pipe structure extending in one direction along a rear edge of the lower portion of the frame 60. A burner body 121 forming a frame of the burner 120 may be shaped in a bar extending in one direction. The burner body 121 may extend along a longitudinal direction of the burner case 110. Inside the burner body 121, a gas flow path 121a may extend in a front-rear direction, and a mixed gas is supplied thereinto.

The burner 120 may be arranged at a position deviating from a heating flow path GP. The heating flow path GP is a flow path of air generated by the flow path guide 130 which will be described below. The heating flow path GP may be considered a path connecting the combustion chamber S5 and the heating chamber S2 to each other. As described above, when the burner 120 is arranged at a position deviating from the heating flow path GP, a distance from the burner 120 to the heating flow path GP can be secured, and a space in which air heated by flame exists can be sufficiently formed. To this end, the burner 120 may generate flame toward the heating flow path GP.

Referring to FIG. 6, a spark plug 122 is connected to the burner 120. The spark plug 122 may enable the mixed gas to be burned. The spark plug 122 may include a connector 122a (referring to FIG. 13) to be connected to a power source. The connector 122a may be coupled to a power component inside the outer case 10.

A mixing tube 123 may be provided at one side portion of the burner body 121. The mixing tube 123 may mix external air and gas from the nozzle holder 127. When the burner 120 is operated, gas is supplied from the nozzle holder 127 to one end portion of the burner 120. At this point, a structure in which the width of the mixing tube 123 is reduced causes a lower pressure, and a pressure difference enables surrounding air to be naturally supplied toward the mixing tube 123. In addition, when the mixed gas is burned by the spark plug 122, a flame may be generated from a flame hole 125.

Referring to FIG. 21, a tube air hole 124 may be open in a lower portion of the mixing tube 123. The tube air hole 124 may be open toward the lower plate 117. The tube air hole 124 is connected to the holder air hole 127a' of the nozzle holder 127 coupled to the mixing tube 123. Accordingly, external air may pass through the holder air hole 127a' and the tube air hole 124 and then may be introduced into the gas flow path 121a of the burner body 121. For reference, the lower plate 117 may include the combustion air hole 119 open in a position facing the tube air hole 124. Through the combustion air hole 119, external air, more specifically, external air introduced into the installation space IS may be introduced. The combustion air hole 119 may constitute the first inlet part IP1 which will be described below.

More specifically, when gas is supplied into the burner body 121, some of air required for combustion (hereinbelow, which will be called "primary air") is introduced with the gas, and mixed gas in which the gas and the air are mixed may be burned at the flame hole 125. In addition, at the periphery of flame where combustion is performed, air is newly introduced toward the flame (which will be called "secondary air"), which causes complete combustion. As described above, only when the secondary air is supplied in sufficient quantity in the combustion process, complete combustion can be achieved. Accordingly, the efficiency of the burner 120 is increased. The supply structure of secondary air will be described again.

Referring to FIG. 15, the flame hole 125 may be formed through the burner body 121. The flame hole 125 forms a passage through which mixed air inside the burner body 121 is discharged outside the burner body 121. Multiple flame holes 125 may be arranged at a side portion of the burner body 121 at predetermined intervals along a longitudinal direction of the burner body 121. Accordingly, the burner body 121 may include multiple gas discharge passages along the longitudinal direction of the burner body 121. Reference numeral 126 is an auxiliary flame hole arranged in front of the flame hole 125 to transfer flame.

The flame hole 125 is provided only in the front surface of the burner body 121. At this point, the front surface of the burner body 121 is a surface of the burner 120 facing the door 50. The flame hole 125 is not provided in an upper, lower, or rear surface of the burner 120, and is provided only in a surface facing forward. The flame hole 125 may face the flow path guide 130.

The flame hole 125 may be open toward the lower flow path. The lower flow path is a path through which air flows inside the combustion chamber S5. At least a part of the lower flow path may be formed by the flow path guide 130. When the flame hole 125 faces the lower flow path, a flame generated from the flame hole 125 does not heat a surface of the burner case 110 but heats concentrically air in the combustion chamber S5. Therefore, the burner 120 can heat air in the combustion chamber S5 efficiently, and it is possible to prevent the burner case 110 from being overheated by radiant heat. Furthermore,, an open direction of the flame hole 125 of the burner 120 may be in parallel to the direction of the rotation shaft 92 of the circulation fan 93. The flame hole 125 of the burner 120 may be open toward a flow path through which the circulation chamber SA and the combustion chamber S5 are connected to each other.

The flame hole 125 may constitute multiple flames. The flame hole 125 may be arranged in the longitudinal direction of the burner body 121. Furthermore, the multiple flame holes 125 may be arranged along a circumferential direction of the burner body 121. The burner 120 may include three flame hole arrays having different angles along the circumferential direction. The three flame hole arrays may provide stronger firepower as flames from the three flame hole arrays are combined together.

The nozzle holder 127 may be provided at one side of the burner body 121. The nozzle holder 127 may transfer external-supplied gas to the burner body 121. To this end, the nozzle holder 127 may be connected to a nozzle (not illustrated) of an external gas pipe (not illustrated). The nozzle holder 127 may transfer gas supplied from the gas pipe to the gas flow path 121a, and air and gas may be mixed in this process.

Referring to FIG. 21, a holder main body 127a of the nozzle holder 127 may be coupled to one end portion of the burner body 121 by covering the end portion. The holder air hole 127a' may be formed in a lower portion of the holder main body 127a. The holder air hole 127a' may be connected to the tube air hole 124 provided in the mixing tube 123. The holder air hole 127a' is connected to the tube air hole 124 to form one air suction passage. The air suction passage may be a path through which the primary air is supplied.

Referring to FIG. 21, the path through which the primary air at the external space is introduced is illustrated. The primary air may be introduced through the combustion air hole 119, i.e., the first inlet part formed in the lower plate 117, toward the inside space of the combustion chamber S5 (direction of arrow ①). In addition, the introduced primary air may pass through the holder air hole 127a' and the tube air hole 124 successively, and then move along the gas flow path 121a of the burner body 121 (direction of arrow ③). At this point, the primary air may be introduced not only through the combustion air hole 119 but also through the panel opening 23 of the rear panel 20 (direction of arrow ②). The panel opening 23 is open toward the nozzle holder 127 so that the primary air may be efficiently supplied.

The combustion air hole 119 and the panel opening 23 may constitute the first inlet part IP1. The first inlet part IP1 may be a passage through which air is directly supplied to the gas flow path 121a of the burner body 121. Even when the panel opening 23 is shielded by the shielding cover 28, the nozzle holder 127 is open, so it may be a part of the first inlet part. As another example, one of the combustion air hole 119 or the panel opening 23 is omitted, and only the remaining one may constitute the first inlet part IP1.

A gas inlet hole 127b may be open in the nozzle holder 127. The gas inlet hole 127b may be connected to the gas pipe. The gas inlet hole 127b may be open in a different direction from the holder air hole 127a'. More specifically, the gas inlet hole 127b may face the panel opening 23 of the rear panel 20. Accordingly, the gas inlet hole 127b may be exposed outward through the panel opening 23. In FIG. 21, an arrow ④ indicates a path through which external gas is supplied toward the gas inlet hole 127b.

Referring to FIG. 21, the burner fixation piece 128 coupled to the burner main body 121 may be in close contact with the fixation rib 113b. The burner body 121 may be fixed to the burner case 110 and the frame 60 by the burner fixation piece 128 and the bracket part 129 at the opposite side.

Next, the flow path guide 130 constituting the heating device 100 will be described. Referring to the exploded view of FIG. 7, the flow path guide 130 may be shaped in a rough hexahedron. The flow path guide 130 is stored in the combustion chamber S5, so the flow path guide 130 may have a volume less than or equal to the volume of the combustion chamber S5. The flow path guide 130 may be formed in a separate object from the burner case 110 and then arranged at the combustion chamber S5. As another example, the flow path guide 130 may be integrated with the burner case 110.

The flow path guide 130 may form multiple flow paths with the burner case 110. The flow path guide 130 may partition the combustion chamber S5 into multiple spaces and generate respective air flows into the partitioned spaces. At this point, partitioning means that, even when the two spaces are not completely separated from each other, air flows into each separate space. As described below, the flow path guide 130 may partition a connection passage 61a' into a heating outlet part 134 and a cooling outlet part OP1, OP2.

The flow path guide 130 may partition the combustion chamber S5 into multiple flow paths. A part GP of the flow paths may transfer high-temperature air heated by the burner 120 to the circulation chamber SA, and the other part CP1, CP2 may cool the parts while allowing relatively low temperature air to pass. At this point, the flow path through which high-temperature air passes may be the heating flow path GP, and the flow path through which low temperature air passes may be the cooling flow path CP1, CP2. That is to say, the heating flow path GP may be a guide flow path that guides heated high-temperature air along the inside space of the flow path guide 130. The cooling flow path CP1, CP2 provided outside the flow path guide 130 may be a cooling flow path through which relatively low temperature introduced from the external space flows. The above-mentioned flow paths will be described below in detail.

As described above, the flow path guide 130 may provide the heating flow path GP and the cooling flow path CP1, CP2 separated from each other, inside the combustion chamber S5. The heating flow path GP may be a path through which air heated by the burner 120 flows The cooling flow path CP1, CP2 is a path arranged around the burner 120, and may be a path through which relatively lower temperature air than air flowing through the heating flow path GP flows.

The cooling flow path CP1, CP2 may include the first cooling flow path CP1 and the second cooling flow path CP2. The first cooling flow path CP1 may have a path passing through the upper portion of the burner 120. The second cooling flow path CP2 may have a path passing through the lower portion of the burner 120 and connected toward the circulation device C along a surface of the heating device 100. This structure will be described below in detail.

High-temperature air of the combustion chamber S5 heated by the burner 120 may be transferred to the circulation chamber SA. More specifically, the flow path guide 130 may be connected to the heating chamber S2 in the circulation chamber SA and transfer heated air to the heating chamber S2. The flow path guide 130 may form a lower flow path inside the combustion chamber S5. The lower flow path may be connected to an upper flow path formed by the heating chamber S2. The lower flow path may be considered the heating flow path GP provided inside the flow path guide 130.

The flow path guide 130 may be open upward and rearward. At this point, the upward direction means a direction toward the heating chamber S2. The rearward direction means a direction toward the burner 120. The flow path guide 130 may guide a flow of air between the burner 120 and the heating chamber S2 through the heating flow path GP open upward and downward.

Referring to FIGS. 13 and 14, the flow path guide 130 may be inserted through the upper opening 116 of the burner case 110. The burner case 110 is arranged in the upper opening 116 and may form a flow path of air moving upward through the upper opening 116. The flow path guide 130 may be shaped in a rough hexahedron. The flow path guide 130 may be coupled to the burner case 110.

Specifically, the flow path guide 130 may include the guide front surface part 131, a guide side part 132, a guide upper surface part 133, and a guide rear surface part 135. The guide front surface part 131 may form a front surface of the flow path guide 130. The guide side part 132 may constitute a side surface of the flow path guide 130. The guide upper surface part 133 may constitute an upper surface of the flow path guide 130. The guide rear surface part 135 may constitute a rear surface of the flow path guide 130.

The heating outlet part 134 may be open in the guide upper surface part 133. The heating outlet part 134 may be formed vertically in the guide upper surface part 133. The heating outlet part 134 may connect the heating flow path GP formed in the flow path guide 130 to the heating chamber S2. Multiple heating outlet parts 134 may be arranged in a left-right direction of the flow path guide 130. As another example, the heating outlet part 134 may be shaped into one continuous long hole.

The guide front surface part 131 may be in close contact with the front plate 111 of the burner case 110. More specifically, the guide front surface part 131 may be in close contact with the spacer part 111a of the front plate 111. The guide front surface part 131 may be coupled to the spacer part 111a by a fastener such as a screw (not illustrated) or welded thereto. The flow path guide 130 is coupled only to the spacer part 111a, and a remaining part thereof is not coupled to the burner case 110.

Referring to FIGS. 18 to 20, the width of an upper end of the flow path guide 130 may be narrower than the width of the connection passage 61a. Accordingly, an outer surface of the flow path guide 130 and an inner surface of the connection passage 61a may be spaced apart from each other. The cooling outlet part OP1, OP2 may be formed between the flow path guide 130 and the connection passage 61a that are spaced apart from each other as described above. The cooling outlet part OP1, OP2 may be formed without disconnection around a surface of the upper end of the flow path guide 130. As another example, the cooling outlet part OP1, OP2 may be partitioned into an outlet OP1 of the flow path CP1 formed between the guide front surface part 131 of the flow path guide 130 and the connection passage 61a, and an outlet OP2 of the flow path CP2 formed between the guide rear surface part 135 and the connection passage 61a, and the two outlets may not be connected to each other.

The cooling flow path CP1, CP2 may be provided around the flow path guide 130. At least a part of the cooling flow path CP1, CP2 may be formed along a space surrounding the flow path guide 130. The first cooling flow path CP1 and the second cooling flow path CP2 may serve the insulation function around the heating flow path GP. The cooling flow path CP1, CP2 may be provided at the outside space of the flow path guide 130 and the inside space of the burner case 110.

As described above, the flow path formed by the flow path guide 130 may be partitioned. That is to say, (i) the heating flow path GP formed inside the flow path guide 130 and transferring heated air to the heating chamber S2 and (ii) the cooling flow path CP1, CP2 formed around the heating flow path GP and through which air having relatively low temperature passes are partitioned from each other. That is to say, the heating flow path GP and the cooling flow path CP1, CP2 may form double flow paths.

The cooling flow path CP1, CP2 may include the first cooling flow path CP1 and the second cooling flow path CP2. The first cooling flow path CP1 and the second cooling flow path CP2 may be provided at respective outside parts of the flow path guide 130. The first cooling flow path CP1 and the second cooling flow path CP2 may be arranged at the opposite sides with the heating flow path GP located therebetween, and may form different air flow paths. The first cooling flow path CP1 and the second cooling flow path CP2 are the same in aspect of (i) connection between the combustion chamber S5 and the heating chamber S2, and (ii) pass of relatively low temperature air by formation of each path partitioned from the heating flow path GP.

The first cooling flow path CP1 may surround the upper end portion of the flow path guide 130 with the second cooling flow path CP2. Accordingly, the heating flow path GP provided inside the flow path guide 130 may be a path through which air heated at a high-temperature flows, and the second cooling flow path CP2 surrounding the heating flow path GP may be a cooling path through relatively low-temperature air passes. The cooling path surrounds the heating flow path GP, thereby forming a kind of insulation layer.

Referring to FIG. 18, the upper end portion of the flow path guide 130 protruding into the heating chamber S2 is illustrated. A part of the flow path guide 130 passes through the connection passage 61a and then enters the inside space of the heating chamber S2. The heating outlet part 134 of the heating flow path GP may also be located inside the heating chamber S2. Accordingly, heated air passing through the heating flow path GP is prevented from leaking out of the flow path guide 130 and may be precisely transferred into the heating chamber S2. As described above, a part of the flow path guide 130 protruding into the heating chamber S2 may be a protrusion (reference numeral not given).

When the protrusion that is a part of the flow path guide 130 passes through the connection passage 61a and then enters the inside space of the heating chamber S2, the heating outlet part 134 that is the outlet of the heating flow path GP and the cooling outlet part OP 1, OP2 that is the outlet of the cooling flow path CP1, CP2 have a height difference therebetween. More specifically, the heating outlet part 134 may be formed higher than the cooling outlet part OP1, OP2. This form may prevent high-temperature air that is discharged through the heating outlet part 134, and relatively low temperature air that is discharged through the cooling outlet part OP1, OP2 from being mixed in the connection passage 61a. Therefore, high-temperature air passing through the heating flow path GP may efficiently heat air inside the heating chamber S2, and low temperature air passing through the cooling flow path CP1, CP2 may cool components around the connection passage 61a. Specifically, the lower portion of the frame 60 constituting the surrounding part of the connection passage 61a may be prevented from being deformed due to high-temperature heat, or the enamel coating layer of the frame 60 may be prevented from being damaged.

Referring to FIG. 13, when the guide front surface part 131 is in close contact with the spacer part 111a, a vertically extending space may be formed between the front plate 111, the spacer parts 111a, and a surface of the guide front surface part 131. The space may constitute the first cooling flow path CP1. When air in external air not heated by the burner 120 or air at the bottom side of the combustion chamber S5 which is less affected by the burner 120 is raised through the first cooling flow path CP1, the first cooling flow path CP1 may cool not only the front plate 111 and a surface of the guide front surface part 131 but also the frame lower surface part 61. For reference, a path formed along the lower plate 117, the lower portion of the burner 120, may also be considered a part of the first cooling flow path CP1.

Referring to the plan view of FIG. 16, the first cooling flow path CP1 formed between the two spacer parts 111a is illustrated. The first cooling flow path CP1 may provide a continuous path between the spacer parts 1 11a. A lower end of the first cooling flow path CP1 may be open toward the lower plate 117 of the burner case 110.

Referring to FIG. 18, an upper end of the first cooling flow path CP1 may be open toward the combustion chamber S5 between an upper portion of the flow path guide 130 and the connection passage 61a formed through the frame lower surface part 61. More specifically, with the upper end portion of the flow path guide 130 arranged in the connection passage 61a, the first cooling outlet part OP1 is formed between the outer surface of the flow path guide 130 and the inner surface of the connection passage 61a. That is to say, the first cooling outlet part OP1 may be formed around the upper end portion of the flow path guide 130.

Referring to FIG. 19, the second cooling flow path CP2 formed by the flow path guide 130 is illustrated. The second cooling flow path CP2 may be provided at the upper portion of the burner 120. The second cooling flow path CP2 may be formed between the flow path guide 130 and the frame lower surface part 61. As described above, the second cooling flow path CP2 may be provided along an upper portion of the combustion chamber S5.

The second cooling flow path CP2 may be a flow path through which, in external air introduced into the combustion chamber S5, some of the air moving along the upper surface of the burner 120 passes. The air passing through the second cooling flow path CP2 may cool a surface of the flow path guide 130 and the frame lower surface part 61. In FIG. 19, an arrow ⑨ indicates a flow path of air moving along the second cooling flow path CP2. As described below, the second cooling outlet part OP2, that is, an outlet of the second cooling flow path CP2, may be continued between the guide rear surface part 135 and the flow path entrance end 65a of the frame lower surface part 61.

The second cooling flow path CP2 may be formed parallel to the upper surface of the combustion chamber S5, i.e., the upper plate 113 or the frame lower surface part 61. Otherwise, the first cooling flow path CP1 is formed parallel to a surface of the combustion chamber S5, i.e., the front plate 111. As described above, the first cooling flow path CP1 and the second cooling flow path CP2 may be formed in respectively different directions, or in respective areas. A start path of the first cooling flow path CP1 is provided lower than the flame hole 125, and a start path of the second cooling flow path CP2 is provided higher than the flame hole 125.

The first cooling outlet part OP1 and the second cooling outlet part OP2, i.e., the outlets of the cooling flow paths CP1 and CP2 may be formed between the upper edges of the flow path guide 130 and the connection passage 61a provided in the frame lower surface part 61. The first cooling outlet part OP1 and the second cooling outlet part OP2 may be a structure covering the heating outlet part 134 of the heating flow path GP. The first cooling outlet part OP1 and the second cooling outlet part OP2 may serve an insulation function around the heating outlet part 134 of the heating flow path GP. For reference, each of the first cooling outlet part OP1, the second cooling outlet part OP2, and the heating outlet part 134 of the heating flow path GP may serve as an inlet part based on the circulation device C.

The first cooling flow path CP1 and the second cooling flow path CP2 may be partitioned from the heating flow path GP, and the first cooling flow path CP1 and the second cooling flow path CP2 may be connected to each other at the cooling outlet parts OP1 and OP2. The first cooling outlet part OP1 may be formed between the guide front surface part 131 and the connection passage 61a, and the second cooling outlet part OP2 may be formed between the guide rear surface part 135 and the connection passage 61a. The first cooling outlet part OP1 and the second cooling outlet part OP2 may be connected to each other between the guide side part 132 constituting the cooling outlet part OP1, OP2 and the connection passage 61a. Accordingly, the first cooling outlet part OP1 and the second cooling outlet part OP2 may be connected to each other to be shaped in a rough rectangle.

The first cooling outlet part OP1 and the second cooling outlet part OP2 may be connected to each other to form a continuous path. The flow path guide 130 and the connection passage 61a have rectangular forms respectively. Therefore, the continuous cooling outlet part OP1, OP2 formed by the first cooling outlet part OP1 and the second cooling outlet part OP2 may entirely have a rectangular channel structure. That is to say, based on a plan structure, the heating outlet part 134 having a rectangular form may be covered by the cooling outlet part OP1, OP2 having a larger rectangular form.

Meanwhile, in the guide rear surface part 135, the guide rear surface part 135 may be formed with a vertical length shorter than the guide front surface part 131. Accordingly, the guide rear surface part 135 may be spaced apart from the lower plate 117 in an upward direction by a longer distance than the guide front surface part 131. That is to say, a lower end of the guide rear surface part 135 is spaced upward apart from the bottom of the combustion chamber S5 more than a lower end of the guide front surface part 131, so an entrance of the heating flow path GP may be open toward the burner 120. Through the entrance of the heating flow path GP, the frame F of the burner 120 may be guided into the heating flow path GP. Therefore, the entrance of the heating flow path GP may be formed between the lower end of the guide rear surface part 135 and the lower plate 117.

A part of the guide rear surface part 135 is bent, and a rear bent portion 135a may be provided. The rear bent portion 135a may extend toward the rear panel 20, more specifically, in parallel to the open direction of the flame hole 125. Referring to FIG. 19, the rear bent portion 135a may reduce a distance between a guide end portion 145a of the flame guide 140, which will be described below, and the flow path guide 130. A first gap part G1 may be formed between the rear bent portion 135a and the guide end portion 145a as the rear bent portion 135a and the guide end portion 145a are spaced apart from each other by a predetermined distance. The secondary air may be introduced through the first gap part G1 described above. That is to say, the first gap part G1 may be connected to the entrance of the heating flow path GP. When some of air introduced from the external space is introduced through the first gap part G1 between the rear bent portion 135a and the guide end portion 145a, the air may be the secondary air supplied to the burner 120. This secondary air may be supplied as a flame F generated through the flame hole 125 of the burner 120 to help the complete combustion.

Meanwhile, the flow path guide 130 may include a guide fence 137. The guide fence 137 may be provided at the lower end of the guide front surface part 131. The guide fence 137 may protrude in a direction inclined to the burner 120 with respect to the vertical direction. The guide fence 137 may guide air heated by the burner 120 toward the heating flow path GP. The guide fence 137 may enable air heated by the flame F of the burner 120 not to move to the first cooling flow path CP1 and to move along the heating flow path GP to the heating chamber S2.

Referring to FIG. 18, a lower end of the guide fence 137 may be provided at a position lower than the flame hole 125. Reference numeral H1 may indicate an imaginary horizontal line passing through the lowest flame hole 125 among the multiple flame holes 125 of the burner 120. It may be shown that each flame hole 125 of the burner 120 is located higher than the lower end of the guide fence 137. Accordingly, when the flame F generated from each flame hole 125 heats air, the heated air may be guided higher than the lower end of the guide fence 137. Furthermore, when the flame F is formed long in the front-rear direction, the guide fence 137 may prevent the flame F from facing the first cooling flow path CP1.

Next, the flame guide 140 will be described. The flame guide 140 may guide a direction in which the flame of the burner 120 is generated. The flame guide 140 may guide a flow of air so that the air heated by the burner 120 moves to the heating flow path GP. The flame guide 140 may be arranged between the burner 120 and the flow path guide 130. Accordingly, the flame F of the burner 120 and the heated air may be guided toward the flow path guide 130 along the flame guide 140.

The flame guide 140 may be arranged between the upper portion of the flame holes 125 and the heating flow path GP of the flow path guide 130. The flame F generated from each flame hole 125 is blocked by the flame guide 140, and does not extend upward anymore, thereby facing the heating flow path GP along the flame guide 140. Therefore, the burner 120 may concentrically heat air moving upward through the heating flow path GP.

The flame guide 140 may be made of a material having high heat resistance. The flame guide 140 may be made of a flat material. The flame guide 140 may be formed long in the longitudinal direction of the burner 120. The flame guide 140 may have a length that can completely cover the area where the flame holes 125 are arranged.

The flame guide 140 may include a fixation body 141 and a guide blade 145. The fixation body 141 and the guide blade 145 may be a connected flat structure. The fixation body 141 may be coupled to the burner 120. The fixation body 141 may be coupled to the surface of the burner 120. To this end, the fixation body 141 may be shaped in a curved surface corresponding to the surface of the burner 120. Referring to FIG. 13, the fixation body 141 may be coupled to a guide coupling part 121b provided on the surface of the burner 120. As described above, a part of the flame guide 140, i.e., the fixation body 141 is coupled to the burner 120, and the guide blade 145 may extend from the fixation body 141 toward the flow path guide 130. More specifically, the guide end portion 145a provided at an end of the guide blade 145 may extend in a direction inclined upward to the connection passage 61a.

Referring to FIG. 19, based on the guide blade 145, the flame F may extend at a lower portion of the guide blade 145. A part of the heating flow path GP guiding heated air may be formed between the lower portion of the flame guide 140 and the bottom surface of the burner case 110. The lower portion of the guide blade 145 and the lower plate 117 are spaced apart from each other to provide a space, and the space may constitute a part of the heating flow path GP. The lower portion of the guide blade 145 may be considered a flame space where the flame F is generated.

Air introduced from the external space may move to an upper portion of the guide blade 145. An external air space S6 may be provided between the upper portion of the guide blade 145 and the upper plate 113 and the secondary air introduced from the external space may be introduced into the external air space S6. The external air space S6 may constitute the second cooling flow path CP2. The air passing through the external air space S6 may cool the surrounding part and may be transferred to the lower portion of the frame 60 through the cooling outlet part OP2.

A part of the secondary air passing through the external air space S6 enters the heating flow path GP through the first gap part G1 between the guide end portion 145a and the rear bent portion 135a to help complete combustion of the burner 120. As described above, a part of the secondary air entering the external air space S6 may move to the first gap part G1 between the guide end portion 145a and the rear bent portion 135a to join the heating flow path GP.

More specifically, the external air space S6 may be formed between the flame guide 140 and the frame rear surface part 65 covering the upper opening 116 of the burner case 110. External air introduced into the external air space S6, based on the rear bent portion 135a, (i) may enter the second cooling outlet part OP2 which is an outlet of the second cooling flow path CP2 through the second gap part G2 formed at an upper portion of the rear bent portion 135a (direction of arrow ⑨), and (ii) may join with the entrance of the heating flow path GP through the first gap part G1 formed between the rear bent portion 135a and the guide end portion 145a. The air joining the heating flow path GP may be transferred to flame generated from the burner 120 to be the secondary air helping complete combustion.

Among the above configuration, the external air space S6 may constitute a part of the second cooling flow path CP2. Air passing through the second cooling flow path CP2 may be transferred to the lower portion of the frame 60 through the second cooling outlet part OP2 to perform the cooling function.

In the structure of the rear bent portion 135a and the guide end portion 145a, an end of the rear bent portion 135a protrudes toward the rear panel 20 more than the guide end portion 145a, thereby guiding the secondary air toward the entrance of the heating flow path GP. At this point, the rear bent portion 135a may be arranged between the guide end portion 145a and the flow path entrance end 65a. Based on the rear bent portion 135a, a junction part (the first gap part G1) of the heating flow path GP formed between the rear bent portion 135a and the guide end portion 145a and the flow path entrance end 65a, and a connection part G2 of the second cooling outlet part OP2 formed between the rear bent portion 135a and the flow path entrance end 65a may be partitioned. In the above configuration, a second gap part G2, i.e., a connection part G2 between the rear bent portion 135a and the flow path entrance end 65a may be connected to the second cooling outlet part OP2. The second gap part G2 may be positioned higher than the burner 120.

As another example, the flame guide 140 and the burner case 110 are spaced apart from each other to form the joint part (the first gap part G1). When the flow path guide 130 is omitted, and the guide end portion 145a of the flame guide 140 extends to a position adjacent to the connection passage 61a, the junction part (the first gap part G1) may be formed between the guide end portion 145a and the connection passage 61a. As another example, the flow path guide 130 is integrated with the burner case 110, and the junction part (the first gap part G1) may be formed between the guide end portion 145a and one end portion of the flow path guide 130.

The upward inclined structure of the guide blade 145 may form the external air space S6 into a space with the width gradually reduced toward the guide end portion 145a. Accordingly, the velocity of air may increase as the air goes to the guide end portion 145a. The air with increased velocity may be efficiently transferred to the second cooling flow path CP2 or the first gap part G1.

The external air space S6 may be a kind of the insulation space S4 formed between the burner 120 and the frame 60. The external air space S6 may reduce the amount of radiant heat of the burner 120 transferred to the lower portion of the frame 60, more specifically, to a part where the frame lower surface part 61 and the frame rear surface part 65 are connected to each other. This can increase the durability of the frame 60.

External air passing through the external air space S6 may cool the flame guide 140 while passing through the flame guide 140. Heat exchange is performed when the external air space S6 is in surface-contact with the surface of the flame guide 140, so the temperature of the flame guide 140 may be reduced, and overheating of the flame guide 140 may be prevented. In FIG. 19, an arrow ⑧ indicates a flow direction of air moving along the surface of the burner 120. The air moved as described above may cool the flame guide 140 while passing through the flame guide 140. In addition, moving continuously along the path that is the external air space S6 and the second cooling flow path CP2 may join the outlet OP2 of the second cooling flow path CP2, or may join the heating flow path GP through the first gap part G1.

At this point, the air joining the heating flow path GP through the first gap part G1 may be turned into a primarily heated state by heat exchange in the process in which the air cools the flame guide 140 while passing through the flame guide 140. Therefore, heat loss caused by the secondary air supplied from the external space can be minimized.

Meanwhile, an end of the guide blade 145, i.e., the guide end portion 145a may extend only to a range where the guide blade 145 does not intrude the heating flow path GP. Referring to FIG. 18, the guide end portion 145a extending from the guide rear surface part 135 to a position set back toward the burner 120 is illustrated. Based on an imaginary line extending in the vertical direction in which the guide rear surface part 135 is provided, the guide end portion 145a is arranged in an area that does not cross the imaginary line. It is possible to prevent the guide end portion 145a from intruding the heating flow path GP and interrupting a flow of air passing through the heating flow path GP.

Next, a process in which external air is heated by the heating device 100 and then supplied to the circulation device C will be described with reference to FIG. 19. First, after mixed gas in which air and gas are mixed is supplied to the burner 120, the spark plug 122 ignites, and then a flame may be generated from each flame hole 125 of the burner 120. An arrow ① indicates a flow direction of the mixed gas, and an arrow ② indicates a direction in which a flame is generated through each flame hole 125.

At this point, external air introduced for combustion of the mixed gas in the burner 120 may be divided into primary air and secondary air. The primary air may be introduced into the combustion chamber S5 through the first inlet part (23, 119, referring to FIG. 21). At the same time, when gas supplied from the external space is sprayed through a nozzle, the gas sprayed through the nozzle and the primary air may be introduced together into the mixing tube 123. As described above, the gas and the air introduced into the mixing tube 123 may be mixed when flowing inside the mixing tube 123 toward the burner body 121 to generate the mixed gas.

Meanwhile, the secondary air is required to perform the complete combustion of the mixed gas, and the secondary air may be supplied in a path different from the primary air. In the enlarged view of FIG. 11, the second inlet part IP2 may be provided between the heating device 100 and the rear panel 20. The second inlet part IP2 may be a predetermined space formed from the heating device 100 and the rear panel 20 separated from each other.

More specifically, with reference to FIGS. 19 and 20, the second inlet part IP2 may be formed in a gap between the burner case 110 and the surface of the rear panel 20. The second inlet part IP2 may be provided between the rear end of the lower plate 117 constituting the burner case 110 and the rear panel 20. Accordingly, the second inlet part IP2 may be provided closer to the outer case 10, i.e., the rear panel 20 than the connection passage 61a.

The second inlet part IP2 may be provided along the surface of the outer case 10. External air may move along the surface of the outer case 10, and naturally be guided to the second inlet part IP2. The second inlet part IP2 may be provided along the surface of the rear panel 20 of the outer case 10. Specifically, the second inlet part IP2 may be provided in parallel to the surface of the rear panel 20.

Referring to FIG. 20, the rear end of the lower plate 117 facing the surface of the rear panel 20 is spaced apart from the rear panel 20, and the second inlet part IP2 is formed therebetween. The panel opening 23 is open in the rear panel 20, and the panel opening 23 may be covered with the shielding cover 28. Accordingly, the second inlet part IP2 may be formed between the lower plate 117 and the shielding cover 28.

The second inlet part IP2 may be provided between the rear end of the upper plate 113 and the rear panel 20. The rear end of the upper plate 113 may also be spaced apart from the surface of the rear panel 20, and a gap is formed therebetween, and the gap may be the second inlet part IP2. Accordingly, external air serving as the secondary air may be simultaneously introduced through two second inlet parts IP2 with different heights from each other.

When an insulator is filled in the insulation space S4, the upper portion of the upper plate 113 is filled with the insulator to reduce the path into which air may be introduced. In this case, the lower portion of the insulation space S4 is provided without the insulator to serve as a predetermined space for the second inlet part IP2.

The second inlet part IP2 may be formed in a mounting direction of the burner 120, i.e., the longitudinal direction of the burner 120. External air introduced through the second inlet part IP2 is used as the secondary air for combustion of the burner 120, so it is necessary to supply the external air evenly to all the flame holes 125 of the burner 120. To this end, the second inlet part IP2 may extend in the longitudinal direction of the burner 120. The second inlet part IP2 may be provided in a left-right direction (Y-axial direction in FIG. 1) like the burner 120.

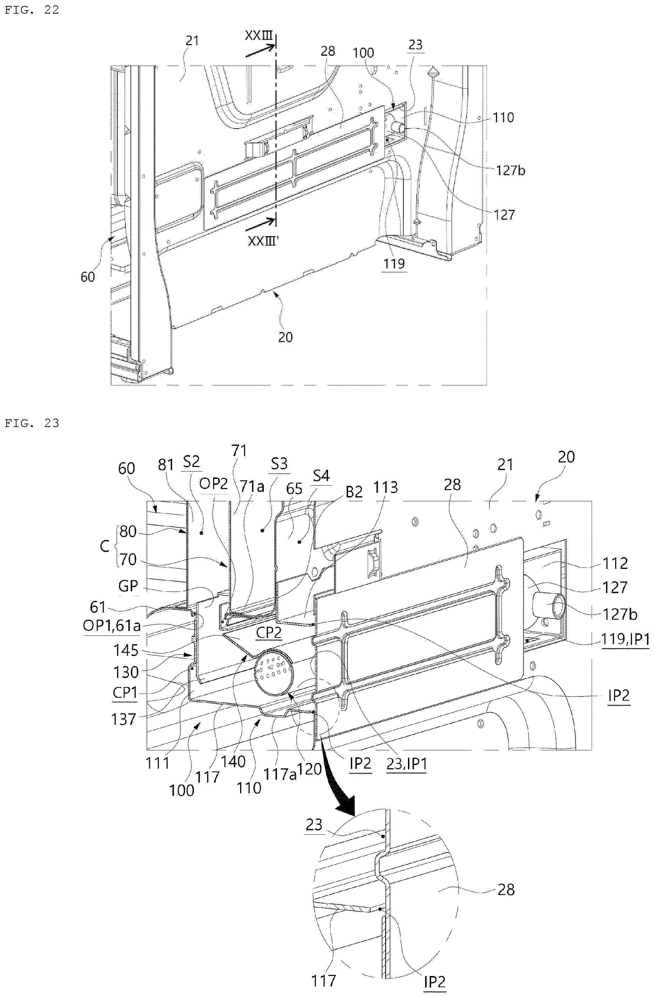

Meanwhile, the chamber opening 118 may be formed in the burner case 110, and the second inlet part IP2 may be connected to the chamber opening 118. The chamber opening 118 is a portion open rearward of the burner case 110, so the second inlet part IP2 may be connected to the chamber opening 118. Accordingly, external air introduced into the second inlet part IP2 may flow toward the burner 120 through the chamber opening 118. Of course, as illustrated in FIG. 22, the chamber opening 118 is covered with the rear panel 20 or the shielding cover 28, and therefore, the introduced air does not flow out rearward and may face the burner 120.

Referring to FIG. 23, the second inlet part IP2 enlarged is illustrated. As illustrated in the drawing, the second inlet part IP2 may be formed in a gap between the lower plate 117 and the shielding cover 28. As described above, the second inlet part IP2 may be provided behind the burner case 110 closer to the rear panel 20 than the front plate 111 of the burner case 110. The external air may cool the lower plate 117 and the uneven part 117a through the air inlet passage SP and then enter the second inlet part IP2.

More specifically, external air flowing in the installation space IS may be introduced, at an end point of the air inlet passage SP that is blocked by the outer case 10, into the heating device 100 through the second inlet part IP2. The end point may be formed at a portion that is blocked by the rear panel 20 of the outer case 10. Accordingly, external air is introduced into the second inlet part IP2 after passing through the surface of the heating device 100 along the air inlet passage SP, so the cooling function by the external air can be efficiently performed.

The second inlet part IP2 may extend to a length equal to or longer than the length of the burner 120. The second inlet part IP2 may provide the secondary air evenly on a wide area of the burner 120.

The second inlet part IP2 may be provided closer to the outer case 10 than the connection passage 61a. Air introduced into the second inlet part IP2 may sufficiently pass through the combustion space S5 and the second heating flow path CP2 and then enter the second cooling outlet part OP2. The second inlet part IP2 may be provided closer to the rear panel 20 than the connection passage 61a.

As described above, when the secondary air is introduced through the second inlet part IP2, the burner 120 may completely burn the mixed gas. The heating device 100 is spaced apart from the circulation fan 93 and arranged in an independent space. Therefore, the heating device 100 is not directly supplied with the secondary air from the circulation fan 93 and may be supplied with the secondary air through the above-described secondary air supply structure. That is to say, the heating device 100 may suck external air as the secondary air without additional components such as a motor, a fan, etc. As another example, a separate flow path and a fan to induce the secondary air may be arranged in the heating device 100.

Specifically, when air heated in the combustion chamber S5 moves to the heating chamber S2 through the natural draft or movement of the circulation fan 93, the pressure of the combustion chamber S5 is lowered. When the pressure of the combustion chamber S5 is lowered than the external space, i.e., the pressure of the installation space IS, external air existing in the installation space IS may be naturally introduced into the combustion chamber S5 through the second inlet part IP2. As described above, when the external air is introduced into the combustion chamber S5 by the negative pressure of the combustion chamber S5, a part of the external air may be used as the secondary air, and a remaining part of the external air may be used to cool components such as the lower portion of the frame 60.

Referring to FIG. 19, a view illustrates a flow in which the air supplied from the external space is used as the secondary air. Air passing through the air inlet passage SP (direction of arrow ④) and cooling the lower plate 117 and the uneven part 117a may be introduced to the combustion chamber S5 through the second inlet part IP2 (direction of arrow ⑤).

As described above, a part of the external air introduced into the combustion chamber S5 may move along the lower plate 117 and pass through a lower portion of the burner 120 (direction of arrow ⑥) and then be supplied to each flame hole 125 of the burner 120 to be as the secondary air. The secondary air may facilitate the complete combustion of mixed gas in the flame holes 125.

In FIG. 19, an arrow ③ indicates a flow of heated air. The complete combustion is performed by the flame holes 125 by the secondary air described above to generate flames, and when the air of the combustion chamber S5 is heated by flame, the heated air may move through the heating flow path GP. The air heated through the heating flow path GP may be transferred to the heating chamber S2.

Referring to FIG. 11, the high-temperature air transferred to the heating chamber S2 (direction of arrow ②) may be mixed with the air of the cooking chamber S1 sucked to the heating chamber S2 by the circulation fan 93 (direction of arrow ①). The mixed air moves to the discharge chamber S3 and then may be supplied to the cooking chamber S1 through the discharge holes 75, 85 (direction of arrow ③). In FIG. 11, an arrow ④ indicates a direction in which external air moves to the lower portion of the heating device 100, an arrow ⑤ and an arrow ⑥ indicate air flows flowing along the first cooling flow path CP1 and the second cooling flow path CP2.

As described above, the heating device 100 is arranged at the lower portion of the circulation device C circulating air of the cooking chamber S1, and is provided in a space separated from the circulation device C. This structure may prevent flames of the burner 120 from being affected by the fan even when the circulation fan 93 is operated. Accordingly, a separate stabilizer is unnecessary, and a burner reflector for protecting an inner wall of the cooking chamber S1 from flames is omitted.

Specifically, in the present invention, air heated in the heating device 100 has a low density and a large buoyancy as the air is heated and the volume increases, and the heated air may be raised by natural draft. A specific structure related to the circulation of air will be described below. Therefore, even when the circulation fan 93 is not operated, heated air may be supplied to the cooking chamber S1.

Meanwhile, a part of the air flowing along the first cooling flow path CP1 of the lower plate 117 may move toward the front plate 111 and then be introduced between the front plate 111 and the guide front surface part 131. Next, the air may enter the first cooling flow path CP1 (direction of arrow ⑦) formed between the front plate 111 and the guide front surface part 131 by the spacer part 111a.

Furthermore, external air may be introduced through of the upper second inlet part IP2 of the second inlet parts IP2 (direction of arrow ⑤'). The introduced external air may be along the second cooling flow path CP2 over the upper surface of the burner 120. At this point, a part of the air introduced through the lower first inlet part IP1 may also move along the upper surface of the burner 120 (direction of arrow ⑧), so the air can be mixed with the air introduced through the upper second inlet part IP2.

The mixed air moves along the upper surface of the flame guide 140 to cool the flame guide 140. The air moving continuously along the second cooling flow path CP2 over the flame guide 140 may enter the second cooling outlet part OP2 (direction of arrow ⑨). The air transferred toward the second cooling outlet part OP2 through a gap between the guide end portion 145a of the flame guide 140 and the flow path entrance end 65a may be raised and cool the frame lower surface part 61 and the lower portion of the circulation device C.

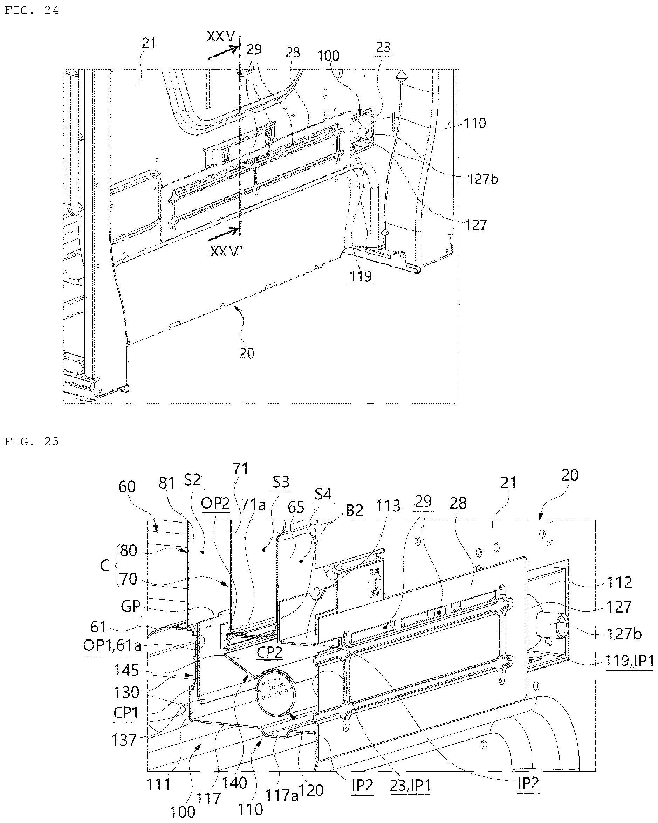

FIGS. 24 and 25 illustrate a rear lower structure of the oven unit constituting the second embodiment of the present invention. In describing parts different from the above-described embodiment, a cover hole 29 may be formed in the shielding cover 28 covering the panel opening 23 of the rear panel 20. The cover hole 29 may be formed through the shielding cover 28. External air may be introduced through the cover hole 29 into the heating device 100, i.e., into the combustion chamber S5.

Referring to FIG. 25, the combustion chamber S5 is located in front of the cover hole 29. The cover hole 29 is connected to the chamber opening 118, so external air may pass through the cover hole 29 to the combustion chamber S5. As described above, a part of the air introduced into the combustion chamber S5 through the cover hole 29 may be supplied to the burner 120 to be used as the secondary air. Furthermore, a part of the introduced air may be transferred to the second cooling flow path CP2 to cool components. Accordingly, the cover hole 29 may be considered to constitute a part of the second inlet part IP2. Of course, a part of the air introduced through the cover hole 29 may be used as the primary air.

The cover hole 29 may have a long hole form that is provided in a longitudinal direction of the shielding cover 28, i.e., provided in parallel to the extension direction of the burner 120. Multiple cover holes 29 may be provided in the shielding cover 28 at constant intervals. As described above, external air introduced through the cover holes 29 formed in the extension direction of the burner 120 may be evenly supplied to the flame holes 125 of the burner 120.

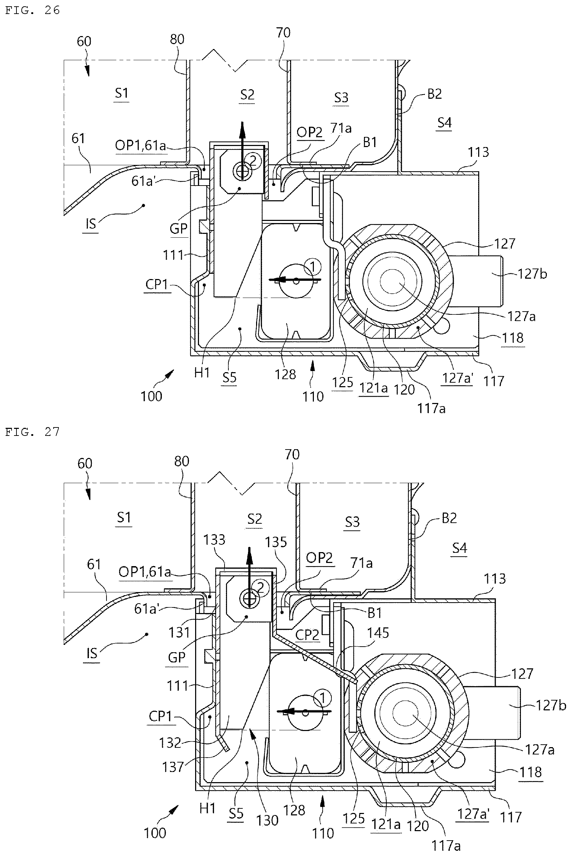

FIG. 26 is a sectional view illustrating the structure of the heating device 100 constituting a third embodiment of the present invention. In describing different parts from the above-described embodiments, the heating device 100 does not include the flow path guide formed into a separate object, and the flow path guide may be integrated with the burner case 110. That is to say, a flow path guide part (not given reference numeral) forming the heating flow path GP is integrated with the burner case 110 of the heating device 100. Accordingly, a flow path guide is not separately provided and coupled to the burner case, and the flow path guide part integrally provided may partition the combustion chamber S5.

In FIGS. 27 to 30, the structure of the heating device 100 constituting a fourth embodiment of the present invention is illustrated. In describing parts different from the above-described embodiments, the heating device 100 may include the guide blade 145 to guide flames of the burner 120. The guide blade 145 may be integrated with the flow path guide 130. The flow path guide 130 may not only guide the heated air to the heating chamber S2, but also guide the extension direction of the flames.

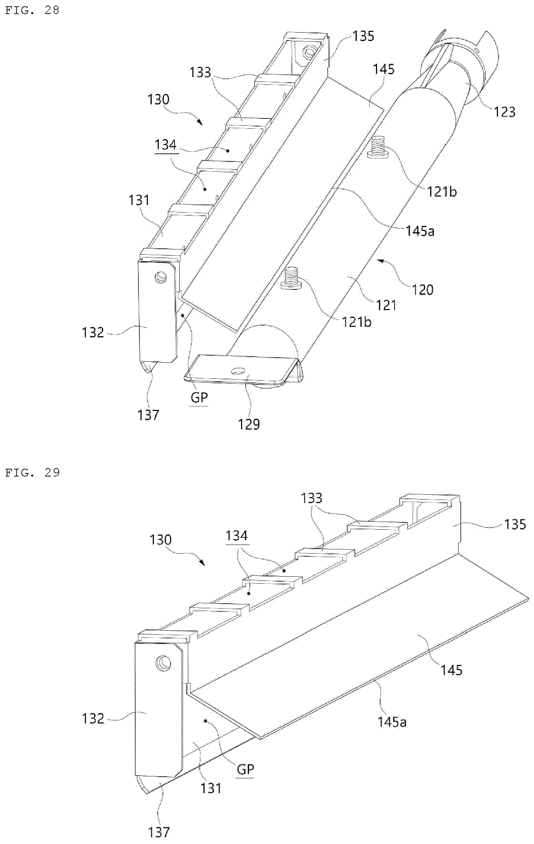

Referring to FIG. 28, the guide blade 145 may extend from the guide rear surface part 135 of the flow path guide 130. The guide blade 145 may be provided in a direction inclined downward from the guide rear surface part 135 toward the burner 120. The guide blade 145 may have a rough flat structure. The guide blade 145 may extend in the same direction as the guide rear surface part 135. The guide blade 145 may have a length longer than or at least equal to the length of the area where the flame holes 125 of the burner 120 are arranged.

An end portion 145a of the guide blade 145 may extend to a position adjacent to the surface of the burner 120. The end portion 145a of the guide blade 145 may be spaced apart from the surface of the burner 120 at a predetermined distance. As described above, air may flow into a gap in which the end portion 145a of the guide blade 145 is spaced apart from the surface of the burner 120. After external air is introduced into the combustion chamber S5, the external air may be transferred between the end portion 145a of the guide blade 145 and the surface of the burner 120. The air transferred as described above may be supplied to the flame holes 125 of the burner 120 and used as the secondary air.

Referring to FIG. 29, the heating flow path GP may be formed among the guide blade 145, the guide front surface part 131, and the guide side part 132. Air heated by the burner 120 may be raised through the heating flow path GP. The guide blade 145 may serve to guide the heated air to the heating flow path GP. The guide blade 145 and the guide front surface part 131 may form the heating flow path GP in which the width is gradually reduced in an upward direction, thereby increasing the velocity of flowing raised air.

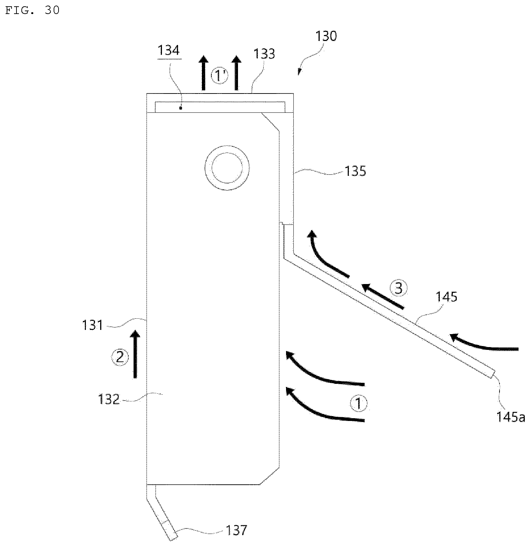

Referring to FIG. 30, a flow of air entering the heating flow path GP is indicated with an arrow ①. Air passing through the heating flow path GP may enter the combustion chamber S5 (referring to the direction of arrow ①'). At the same time, air for cooling may flow along the surface of the flow path guide 130 (direction of arrow ②). Air may cool the flow path guide 130 while passing along the surface of the guide front surface part 131 and may move to the first cooling flow path CP1. Furthermore, a part of external air may pass above the guide blade 145 and may cool the guide blade 145 (direction of arrow ③). The air cooling the guide blade 145 may move to the second cooling flow path CP2.

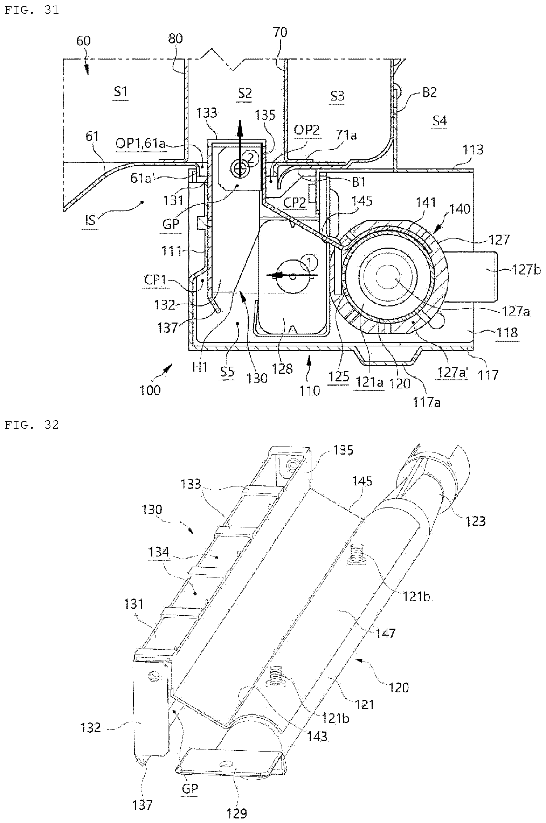

FIGS. 31 to 33 illustrate the structure of the heating device 100 constituting a fifth embodiment of the present invention. In describing parts different from the above-described embodiments, the guide blade 145 may be arranged between the burner 120 and the flow path guide 130 which constitute the heating device 100. The guide blade 145 may be integrated with the flow path guide 130. The flow path guide 130 may not only guide the heated air to the heating chamber S2, but also guide the extension direction of the flames.

Referring to FIG. 31, the guide blade 145 may extend from the guide rear surface part 135 of the flow path guide 130. The guide blade 145 may be provided in a direction inclined downward from the guide rear surface part 135 toward the burner 120. The guide blade 145 may have a rough flat structure. The guide blade 145 may extend in the same direction as the guide rear surface part 135. The guide blade 145 may have a length longer than or at least equal to the length of the area where the flame holes 125 of the burner 120 are arranged.

Referring to FIG. 32, a first end portion of the guide blade 145 may be connected to the guide rear surface part 135, and a second end portion of the guide blade 145 may include a burner fixation part 147 that is in close contact with the surface of the burner 120. The burner fixation part 147 in close contact with the surface of the burner 120 may be coupled to the guide coupling part 121b of the burner 120.

A depressed portion 143 may be formed at a portion where the guide blade 145 extends to the burner fixation part 147. From the depressed portion 143, the burner fixation part 147 may cover the surface of the burner 120.

The guide blade 145 connects the guide rear surface part 135 and the burner 120 to each other, so an upper portion and a lower portion may be partitioned with the guide blade 145 as the center. Referring to FIG. 31, a space connected to the second cooling flow path CP2 may be formed in the upper portion of the guide blade 145. The lower portion of the guide blade 145 may be a space connected to the heating flow path GP.

Referring to FIG. 32, the heating flow path GP may be formed among the guide blade 145, the guide front surface part 131, and the guide side part 132. Air heated by the burner 120 may be raised through the heating flow path GP. The guide blade 145 may serve to guide the heated air to the heating flow path GP. The guide blade 145 and the guide front surface part 131 may form the heating flow path GP in which the width is gradually reduced in an upward direction, thereby increasing the velocity of flowing raised air.

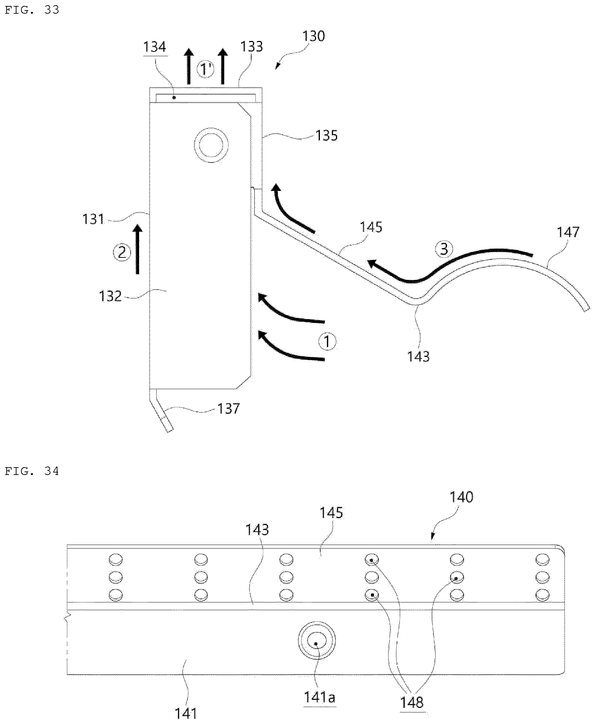

Referring to FIG. 33, a flow of air entering the heating flow path GP is indicated with an arrow ①. Air passing through the heating flow path GP may enter the combustion chamber S5 (referring to the direction of arrow ①'). At the same time, air for cooling may flow along the surface of the flow path guide 130 (direction of arrow ②). Air may cool the flow path guide 130 while passing along the surface of the guide front surface part 131 and may move to the first cooling flow path CP1. Furthermore, a part of external air may pass above the guide blade 145 and may cool the guide blade 145 (direction of arrow ③). The air cooling the guide blade 145 may move to the second cooling flow path CP2.

FIGS. 34 to 35 illustrate the structure of the heating device 100 constituting a fifth embodiment of the present invention. In describing parts different from the above-described embodiments, the heating device 100 may include the flame guide 140. The flame guide 140 may be coupled to the surface of the burner 120. The flame guide 140 may guide the direction of flames generated from each flame hole 125 of the burner 120.

The flame guide 140 may include the fixation body 141 coupled to the burner 120. The fixation body 141 may be shaped in a curved surface to correspond to the surface of the burner 120. The fixation body 141 may include a coupling hole 141a into which the guide coupling part 121b of the burner 120 is inserted.

The guide blade 145 may be connected to the fixation body 141. The guide blade 145 may guide the direction of a flame the burner 120 and guide air heated by the flame toward the heating flow path GP. The guide blade 145 may have a rough disc structure. The guide blade 145 may extend from the fixation body 141 at the depressed portion 143 as a start point.

The guide blade 145 may include an air introduction hole 148. The air introduction hole 148 may be formed through the guide blade 145. Each air introduction hole 148 may form a path through which air passes. A part of air moving along the upper portion of the guide blade 145 may pass through the air introduction hole 148 and move downward, i.e., toward the flame holes 125 of the burner 120. The air may serve as the secondary air to help the combustion of the burner 120 and prevent flames from extending excessively long.

Multiple air introduction holes 148 may be provided. The air introduction holes 148 may form total of 3 rows along the longitudinal direction of the air introduction holes 148. The air introduction holes 148 in 3 rows may be arranged at equivalent intervals. Air may be efficiently introduced to the front space of the burner 120 through the holes.

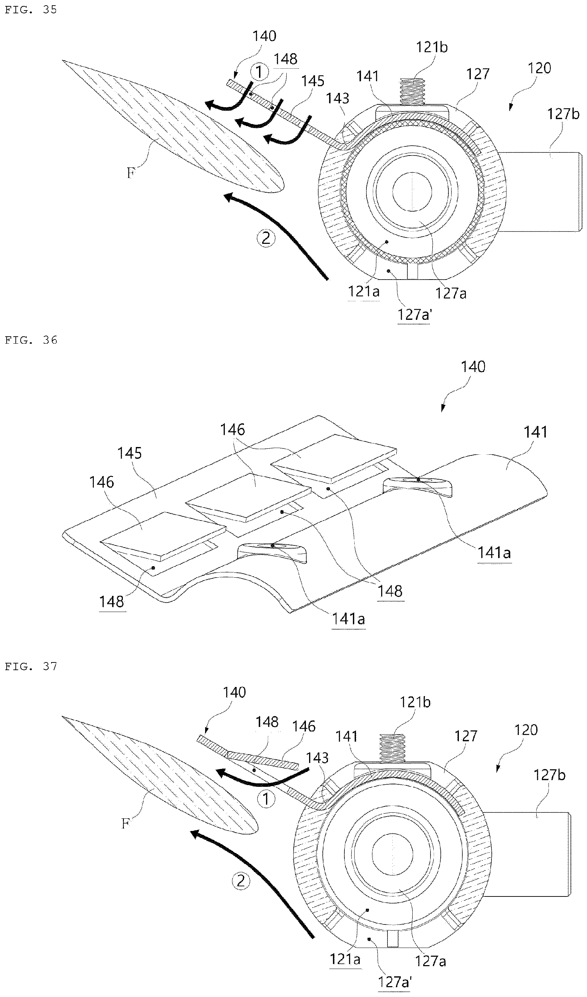

Referring to FIG. 35, a part of air moving along the upper portion of the guide blade 145 may move downward through the air introduction holes 148 (direction of arrow ①). The air moving downward may be supplied to the front space of the burner 120. The air supplied as described above may serve as the secondary air generating flames. In the drawing, F indicates a form of a flame. As described above, air passing through the air introduction holes 148 may help the complete combustion of the mixed gas to induce efficient generation of the flame. At the same time, air flowing through the lower portion of the burner 120 (direction of arrow ②) may also serve as the secondary air to help the complete combustion of the mixed gas.

FIGS. 36 to 37 illustrate the structure of the heating device 100 constituting a seventh embodiment of the present invention. In describing parts different from the above-described embodiments, the heating device 100 may include the flame guide 140. The flame guide 140 may be coupled to the surface of the burner 120. The flame guide 140 may guide the direction of flames generated from each flame hole 125 of the burner 120.

The flame guide 140 may include the fixation body 141 coupled to the burner 120. The fixation body 141 may be shaped in a curved surface to correspond to the surface of the burner 120. The fixation body 141 may include a coupling hole 141a into which the guide coupling part 121b of the burner 120 is inserted.

The guide blade 145 may be connected to the fixation body 141. The guide blade 145 may guide the direction of a flame the burner 120 and guide air heated by the flame toward the heating flow path GP. The guide blade 145 may have a rough disc structure. The guide blade 145 may extend from the fixation body 141 at the depressed portion 143 as a start point.

The guide blade 145 may include an air guide 146. The air guide 146 may have a form in which a part of the guide blade 145 is cut and then lifted. More specifically, the air guide 146 may have a form of a cantilever extending from the guide blade 145.

At this point, a spacing distance in which an end portion of the air guide 146, i.e., a free end of the cantilever is spaced apart from the guide blade 145 may be maximized. That is to say, the air guide 146 may extend in a direction in which a distance between the air guide and each air introduction hole 148 increases gradually as the air guide 146 goes to an end portion and the free end. Accordingly, air hitting on the air guide 146 may naturally move to the lower space of the air guide 146.

Each air introduction hole 148 may be provided below the air guide 146. Each air introduction hole 148 may be considered a hole remaining after the air guide 146 is bent from the guide blade 145. Each air introduction hole 148 may form a path through which air passes. A part of air moving along the upper portion of the guide blade 145 may be blocked by the air guide 146 and then may be guided into each air introduction hole 148.

As described above, the air passing through each air introduction hole 148 may move downward, i.e., toward each flame hole 125 of the burner 120. The air may serve as the secondary air to help the combustion of the burner 120 and prevent flames from extending excessively long.

Multiple guides 146 and multiple air introduction holes 148 may be provided. Three air guides 146 and three air introduction holes 148 may be provided in the longitudinal direction of the guide blade 145. The multiple air guides 146 and the multiple air introduction holes 148 may be arranged at equivalent intervals. Air may be efficiently introduced through the multiple air introduction holes 148 toward the front space of the burner 120.

Referring to FIG. 37, a part of air moving along the upper portion of the guide blade 145 may be blocked by the multiple air guides 146 and move downward through the multiple air introduction holes 148 (direction of arrow ①). The air moving downward may be supplied to the front space of the burner 120. The air supplied as described above may serve as the secondary air generating flames. In the drawing, F indicates a form of a flame. As described above, air passing through the air introduction holes 148 may help the complete combustion of the mixed gas to induce efficient generation of the flame. At the same time, air flowing through the lower portion of the burner 120 (direction of arrow ②) may also serve as the secondary air to help the complete combustion of the mixed gas.

Although the preferred embodiments of the present invention have been described for illustrative purposes, those skilled in the art will appreciate that various modifications, additions and substitutions are possible, without departing from the scope of the present invention as disclosed in the accompanying claims. Therefore, the preferred embodiments described above have been described for illustrative purposes, and should not be intended to limit the technical scope of the present invention, and the scope of the present invention are not limited to the embodiments. The protective scope of the present invention should be interpreted by the accompanying claims, and all technical scope should be interpreted as being included in the scope of the present invention.

## Claims

1. A cooking appliance comprising:
a frame (60) in which a cooking chamber (S1) is formed;
a circulation device (C) arranged inside the frame (60) and having a circulation chamber (SA) therein, the circulation chamber (SA) configured to allow airflow between the circulation chamber (SA) and the cooking chamber (S1); and
a heating device (100) arranged outside the frame (60) and configured to supply heated air to the circulation chamber (SA),
wherein the heating device (100) comprises:
a burner case (110) arranged at a lower portion of the circulation device (C), and having a combustion chamber (S5) therein, the combustion chamber (S5) being configured to allow airflow between the combustion chamber (S5) and the circulation chamber (SA); and
a burner (120) arranged in the combustion chamber (S5) and configured to heat air introduced into the combustion chamber (S5).

2. The cooking appliance of claim 1, wherein a connection passage (61a) is open in the frame (60) to connect the circulation chamber (SA) and the combustion chamber (S5) to each other, and the heating device (100) is arranged opposite to the circulation device (C) with the connection passage (61a) located therebetween.

3. The cooking appliance of claim 2, wherein the connection passage (61a) of the frame (60) is formed in a bottom surface of the frame (60), the circulation device (C) is arranged at an upper portion of the bottom surface of the frame (60), and the heating device (100) is disposed at a lower portion of the bottom surface of the frame (60).

4. The cooking appliance of any one of claims 1 to 3, wherein the circulation chamber (SA) includes a first flow path connected to the cooking chamber (S1),
the combustion chamber (S5) includes a second flow path for transferring air heated by the burner (120) to the first flow path, and
the first flow path and the second flow path are connected to each other through a connection passage (61a) provided in a bottom surface of the frame (60) in a height direction of the frame (60).

5. The cooking appliance of any one of claims 1 to 4, further comprising:
an outer case (10) comprising the frame (60),
wherein an installation space (IS) is provided between the frame (60) and the outer case (10), and the heating device (100) is arranged in the installation space (IS).

6. The cooking appliance of any one of claims 2 to 5, wherein the burner (120) extends in a direction orthogonal to an open direction of a connection passage (61a) of the frame (60).

7. The cooking appliance of any one of claims 1 to 6, wherein a rear panel (20) is arranged behind the frame (60) to cover a rear surface of the frame (60), and
the heating device (100) is disposed in an area between a rear portion of the circulation device (C) and a front space of the rear panel (20), and the burner (120) is provided in a direction parallel to a surface of the rear panel (20).

8. The cooking appliance of any one of claims 1 to 7, wherein a heating flow path (GP) is provided in the burner case (110) to guide heated air toward the circulation chamber (SA), the burner (120) is arranged at a position deviating from the heating flow path (GP), and the burner (120) is configured to generate a flame toward the heating flow path (GP).

9. The cooking appliance of claim 1, wherein a connection passage (61a) is open in the frame (60) to connect the circulation chamber (SA) and the combustion chamber (S5) to each other, and a flame guide (140) is arranged between the burner (120) and the connection passage (61a).

10. The cooking appliance of any one of claims 1 to 7, wherein the burner (120) is configured to generate a flame in a first direction, and the circulation chamber (SA) and the combustion chamber (S5) provide a continuous flow path in a second direction orthogonal to the first direction.

11. The cooking appliance of any one of claims 1 to 10, wherein the circulation device (C) and the heating device (100) are fixed to different positions on a surface of the frame (60).

12. The cooking appliance of any one of claims 1 to 11, wherein with a surface of the circulation device (C) and a surface of the heating device (100) in non-contact with each other, the circulation device (C) and the heating device (100) are coupled to the frame (60) respectively.

13. The cooking appliance of claim 1, further comprising:
an outer case (10) comprising the frame (60),
wherein the heating device (100) comprises a first inlet part (IP1) open toward a surface of the burner (120), and
a second inlet part (IP2) connected to the combustion chamber (S5) is provided between the heating device (100) and the outer case (10).

14. The cooking appliance of claim 1, wherein when air heated by the burner (120) moves from the combustion chamber (S5) to the circulation chamber (SA), the combustion chamber (S5) has a pressure lower than a pressure outside the heating device (100).

15. The cooking appliance of claim 1, wherein the circulation device (C) comprises:
a cover plate (80) arranged in front of a wall surface of the cooking chamber (S1), comprising a suction hole (84) to suck air in the cooking chamber (S1), and providing the circulation chamber (SA) between the cover plate (80) and the wall surface of the cooking chamber (S1); and
a partition plate (70) arranged between the cover plate (80) and the wall surface of the cooking chamber (S1), and partitioning the circulation chamber (SA) into a heating chamber (S2) and a discharge chamber (S3), and having a communication hole (74) formed open to connect the heating chamber (S2) and the discharge chamber (S3) to each other,
wherein the combustion chamber (S5) is connected to the heating chamber (S2), and
a circulation fan (93) is arranged in the discharge chamber (S3) to circulate air in the cooking chamber (S1).
